# EUROPÄISCHE PATENTSCHRIFT

(11) **EP 2 884 874 B1**
(45) Veröffentlichungstag und Bekanntmachung des Hinweises auf die Patenterteilung: **11.12.2019**
(21) Anmeldenummer: 13750688.7
(22) Anmeldetag: 15.08.2013
(51) Int. Cl.: A47J 31/36

(54) **BRÜHVORRICHTUNG UND VERFAHREN ZUM BETRIEB EINER BRÜHVORRICHTUNG**
BREWING APPARATUS AND METHOD FOR OPERATING A BREWING APPARATUS
DISPOSITIF D'INFUSION ET PROCÉDÉ DE FONCTIONNEMENT D'UN DISPOSITIF D'INFUSION

(30) Priorität: 20.08.2012 DE 102012107615; 14.09.2012 DE 102012108653
(43) Veröffentlichungstag der Anmeldung: 24.06.2015
(73) Patentinhaber: Eugster/Frismag AG, 8580 Amriswil (CH)
(72) Erfinder: FISCHER, Daniel, 8590 Romanshorn (CH); SONDEREGGER, Remo, 8274 Tägerwilen (CH)
(74) Vertreter: Loock, Jan Pieter
(86) Internationale Anmeldenummer: PCT/EP2013/067069
(87) Internationale Veröffentlichungsnummer: WO 2014/029685

(56) Entgegenhaltungen:
- EP-A1- 1 721 553
- EP-A1- 1 767 129
- EP-A1- 1 859 714
- EP-A1- 2 070 452
- WO-A1-2008/004116
- WO-A1-2010/032271
- WO-A2-2008/152484
- DE-A1- 10 334 526
- US-A1- 2008 006 159
- US-A1- 2011 000 377

## Beschreibung

### Stand der Technik

Die vorliegende Erfindung betrifft eine Brühvorrichtung zum Extrahieren einer Portionskapsel mit einem ersten Brühkammerelement und einem zweiten Brühkammerelement, wobei das erste und/oder das zweite Brühkammerelement entlang einer axialen Richtung von einer Ladestellung, in welcher das erste und das zweite Brühkammerelement voneinander beabstandet sind, in eine Extraktionsstellung, in welcher das erste und das zweite Brühkammerelement eine im Wesentlichen geschlossene Brühkammer bilden, bewegbar ist, wobei die Brühvorrichtung eine Antriebsmechanik zur Bewegung des ersten und/oder zweiten Brühkammerelements aufweist.

Eine solche Brühvorrichtung ist beispielsweise aus der Druckschrift DE 10 2010 044 945 A1 bekannt. Die Brühvorrichtung ist zum Extrahieren einer Portionskapsel zur Herstellung eines Getränks bestimmt, insbesondere Kaffee. Die Brühvorrichtung umfasst ein zweites Brühkammerelement, welches als glockenförmiger Hohlraum zur Aufnahme einer mit einer Getränkesubstanz gefüllten Portionskapsel ausgebildet ist. Ein erstes als Verschlusselement ausgebildetes Brühkammerelement ist mit einem Kniehebel verbunden und entlang einer axialen Richtung von einer Ladestellung in eine Extraktionsstellung bewegbar. In der Extraktionsstellung verschließt das Verschlusselement den glockenförmigen Hohlraum und bildet eine im Wesentlichen geschlossene Brühkammer. Am Verschlusselement ist eine Injektionsanordnung zum Einleiten einer Extraktionsflüssigkeit in die Portionskapsel angeordnet, welche mit der Getränkesubstanz innerhalb der Portionskapsel wechselwirkt und anschließend von einer am zweiten Brühkammerelement angeordneten Extraktionsanordnung aus der Portionskapsel abgeführt und zur Bereitstellung eines Getränks einem Trinkgefäß zugeführt wird. In der Ladestellung, wobei das Verschlusselement und der glockenförmige Hohlraum beabstandet sind, wird die Brühvorrichtung mit der Portionskapsel beladen. Anschließend wird das Verschlusselement mittels des Kniehebels in die Extraktionsstellung verschoben. Dabei perforieren am Verschlusselement und am glockenförmigen Hohlraum angeordnete Perforationsmittel die Portionskapsel, sodass Öffnungen zur Ein- und Ableitung der Extraktionsflüssigkeit während des Brühvorgangs in der Extraktionsstellung entstehen, wobei ein hoher Extraktionsdruck innerhalb der Brühkammer herrscht. Es ist bekannt, derartige Brühvorrichtungen mittels eines Kniehebelgelenks auszustatten, welche das Verschlusselement von einer Ladestellung in eine Extraktionsstellung verschieben, um eine im Wesentlichen geschlossene Brühkammer zu bilden.

Nachteilig an solchen Brühvorrichtungen ist, dass der während des Brühvorgangs in der Brühkammer herrschende hohe Extraktionsdruck allein vom Kniehebelgelenk aufgefangen werden muss, sodass es nicht möglich ist, eine gegen ein Auslaufen der Extraktionsflüssigkeit abgesicherte, hinreichend dichte, Brühkammer zu garantieren. Die Verwendung eines Kniehebelgelenks, welches derartigen Anforderungen genügt, ist sehr aufwändig und teuer. Es ist daher wünschenswert, eine Brühvorrichtung bereitzustellen, die eine während des Brühvorgangs unter hohem Extraktionsdruck stehende Brühkammer in einem derart geschlossenen Zustand hält und somit gegen ein Auslaufen der Extraktionsflüssigkeit absichert, dass dabei die gesamte Kraft auf Grund des hohen Extraktionsdrucks in der Brühkammer nicht allein von einem Kniehebelgelenk kompensiert werden muss. Darüber hinaus ist es wünschenswert eine Brühvorrichtung zur Verfügung zu stellen, die eine hohe Abdichtung der Brühkammer bei gleichzeitig geringen Herstellungs- und Materialkosten aufweist.

Dokument US-A-2008/0006159 offenbart eine Brühvorrichtung nach dem Oberbegriff des unabhängigen Anspruchs 1. Demnach ist eine Verriegelungsmechanik vorhanden, die ein Teil der Antriebsmechanik ist.

### Offenbarung der Erfindung

Der Erfindung liegt daher die Aufgabe zu Grunde, eine Brühvorrichtung und ein Verfahren zum Betrieb einer Brühvorrichtung bereitzustellen, welche die Nachteile des Standes der Technik nicht aufweist und der Extraktionsdruck von einem Kniehebelgelenk nicht oder nur teilweise aufgefangen werden muss, wodurch die Abdichtung der Brühkammer während des Brühvorgangs verbessert wird. Darüber hinaus soll eine kostengünstigere Herstellung einer derartigen Brühvorrichtung ermöglicht werden.

Gelöst wird die Aufgabe mit einer Brühvorrichtung zum Extrahieren einer Portionskapsel mit einem ersten Brühkammerelement und einem zweiten Brühkammerelement, wobei das erste und/oder das zweite Brühkammerelement entlang einer axialen Richtung von einer Ladestellung, in welcher das erste und das zweite Brühkammerelement voneinander beabstandet sind, in eine Extraktionsstellung, in welcher das erste und das zweite Brühkammerelement eine im Wesentlichen geschlossene Brühkammer bilden, bewegbar ist, wobei die Brühvorrichtung eine Antriebsmechanik zur Bewegung des ersten und/oder zweiten Brühkammerelements aufweist, wobei die Brühvorrichtung eine separate Verriegelungsmechanik zum Verriegeln der Brühkammer in der Extraktionsstellung aufweist. Die erfindungsgemäße Brühvorrichtung hat gegenüber dem Stand der Technik den Vorteil, dass die Brühkammer im Gegensatz zum Stand der Technik mit einer separaten Verriegelungsvorrichtung im geschlossenen Zustand gehalten werden kann, um eine höhere Dichtheit der unter hohem Extraktionsdruck stehenden Brühkammer während des Brühvorgangs zu ermöglichen. Bei der erfindungsgemäßen Verriegelungsmechanik wird darüber hinaus die Schließkraft wesentlich verringert. Dadurch können die Teile von der Verriegelungsmechanik einfacher und günstiger ausgeführt werden. Die Herstellung von Getränken stellt oftmals hohe Anforderungen an die Brühvorrichtung, um ein Getränk mit hoher Qualität herzustellen. Beispielweise wird bei der Herstellung von Espresso heißes Wasser unter hohem Druck durch die Getränkesubstanz gepresst. Die Extraktion einer solchen Flüssigkeit unter hohem Druck stellt besonders hohe Anforderungen an die Dichtheit der Brühkammer der Brühvorrichtung, um ein Getränk der gewünschten Qualität zu erhalten. Wenn jedoch der hohe Druck, der in einer verschließbaren Brühkammer herrscht allein von einem Kniehebelgelenk aufgefangen werden muss, so sind mit der Herstellung einer solchen Brühvorrichtung ein hoher Aufwand und hohe Kosten verbunden, wobei dennoch das gewünschte Ergebnis nicht immer garantiert werden kann. Die erfindungsgemäße Brühvorrichtung weist daher eine separate Verriegelungsvorrichtung auf, die allein zur Verriegelung der Brühvorrichtung in der Extraktionsstellung vorgesehen ist. In besonders vorteilhafter Weise nimmt die erfindungsgemäße Brühvorrichtung mittels der Verriegelungsmechanik die hohen Kräfte auf, welche während des Brühvorgangs auf Grund eines hohen Extraktionsdrucks innerhalb der Brühkammer auftreten. Die vorliegende Erfindung kommt daher dem steigenden Bedarf nach günstigen und zugleich qualitativ hochwertigen Brühvorrichtungen auf besonders geeignete Weise entgegen. Indem die separate Verriegelungsmechanik zumindest einen Teil des in der Brühkammer während des Brühvorgangs herrschenden hohen Drucks aufnimmt, wird somit insbesondere die Antriebsvorrichtung entlastet. Hierdurch wird eine besonders stabile und zugleich kostengünstige Brühvorrichtung aufgrund reduzierter Herstellungs- und Materialkosten bereitgestellt.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass die Antriebsmechanik ein Antriebselement aufweist, welches bevorzugt als Kniehebelgelenk, Zahnstange, Spindel und/oder Schwenkgetriebe ausgebildet ist. In vorteilhafter Weise führt eine derart ausgebildete Antriebsmechanik bei der Verschlussbewegung zur Überführung der Brühvorrichtung von einer Ladestellung in eine Extraktionsstellung dazu, dass eine Verbindung, insbesondere ohne Schlupf, zwischen Antriebsmechanik und dem verschiebbaren Brühkammerelement vorhanden ist, sodass eine besonders stabile Brühvorrichtung mit langer Lebensdauer zur Verfügung steht. Weiterhin ist es vorteilhaft möglich, die Brühvorrichtung mit einem geringen Kraftaufwand, insbesondere durch ein geeignet gewähltes Übersetzungsverhältnis, zu betätigen, sodass innerhalb einer kurzen Wegstrecke mit geringem Kraftaufwand die Brühkammer in die Extraktionsstellung bewegt werden kann.

Gemäß einer bevorzugten Ausführungsform der vorliegenden Erfindung ist vorgesehen, dass die Antriebsmechanik bevorzugt manuell mittels eines Handhebels betätigbar ist und/oder automatisch mittels eines Antriebsmotors antreibbar ist. In vorteilhafter Weise führt eine automatische Antriebsmechanik zu einer besonderen Benutzerfreundlichkeit, da durch Betätigung eines Schalters oder Knopfes die Brühkammer verschlossen werden kann. Bei einer derart automatisch ausgebildeten Antriebsmechanik können außerdem die Leistung des Antriebsmotors reduziert und dadurch Kosten gespart werden.

Gemäß einer bevorzugten Ausführungsform der vorliegenden Erfindung ist vorgesehen, dass die Verriegelungsmechanik von einer Freigabestellung in eine Verriegelungsstellung zum Verriegeln der Brühkammer in der Extraktionsstellung überführbar ist. In vorteilhafter Weise ist die Brühvorrichtung in der Ladestellung, bei welcher das erste und das zweite Brühkammerelement voneinander beabstandet sind, besonders bequem mit einer Portionskapsel befüllbar, insbesondere da auf Grund des Abstands zu an dem ersten und/oder zweiten Brühkammerelement angeordneten Perforationsmitteln die Verletzungsgefahr erheblich reduziert wird.

Gemäß einer bevorzugten Ausführungsform der vorliegenden Erfindung ist vorgesehen, dass die Verriegelungsmechanik einen Riegel aufweist, wobei der Riegel bevorzugt walzenförmig oder kugelförmig ausgebildet ist. In vorteilhafter Weise führt die walzen- oder kugelförmige Ausbildung des Riegels bei der Überführung der Verriegelungsmechanik von der Freigabestellung in die Extraktionsstellung dazu, dass die Verriegelungsbewegung, insbesondere wegen der Rollbewegung des Riegels, mit einem vernachlässigbaren Kraftaufwand stattfindet. Dadurch wird eine besonders benutzerfreundliche Brühvorrichtung bereitgestellt.

Gemäß einer bevorzugten Ausführungsform der vorliegenden Erfindung ist vorgesehen, dass das erste Brühkammerelement ein Rückhaltelement, wenigstens eine Rückstellfeder und ein Verschiebelement aufweist, wobei das Rückhalteelement und das Verschiebeelement mittels einer Rückstellfeder verbunden sind und wobei das Rückhaltelement gegenüber dem Verschiebelement verschiebbar ist. In vorteilhafter Weise führt das mittels Rückstellfeder mit dem Verschiebelement verbundene Rückhalteelement während des Brühvorgangs in der Extraktionsstellung dazu, dass der Riegel zwischen der ersten und zweiten Schräge, sowie dem Rückhalteelement derart eingeklemmt wird, dass die unter hohem Extraktionsdruck stehende Brühkammer eine Kraft über das Rückhaltelement auf den Riegel und dieser wiederum zumindest teilweise auf das Wandungsteil der Brühvorrichtung überträgt, um insbesondere die Antriebsvorrichtung zu entlasten. Damit wird ein besonders dichter und fester Verschluss der Brühkammer ermöglicht, sodass ein Getränk mittels einer heißen Extraktionsflüssigkeit, insbesondere unter hohem Druck, hergestellt werden kann.

Gemäß einer bevorzugten Ausführungsform der vorliegenden Erfindung ist vorgesehen, dass der wenigstens eine Riegel in der Freigabestellung zwischen dem ersten Brühkammerelement und dem Wandungsteil entlang der axialen Richtung verschiebbar ist. In vorteilhafter Weise führt ein verschiebbar angeordneter Riegel bei der Überführung der Verriegelungsmechanik von der Freigabestellung in die Extraktionsstellung dazu, dass die Verriegelungsbewegung wegen der Rollbewegung des Riegels mit einem vernachlässigbaren Kraftaufwand stattfindet. Dadurch wird eine besonders benutzerfreundliche Brühvorrichtung bereitgestellt.

Gemäß einer bevorzugten Ausführungsform der vorliegenden Erfindung ist vorgesehen, dass eine erste Wandung eines fest mit der Brühvorrichtung verbundenen Wandungsteils wenigstens eine erste Schräge und eine zweite Wandung des Verschiebelements wenigstens eine zweite Schräge aufweist, wobei die erste Schräge, die zweite Schräge und das Rückhalteelement mit dem Riegel in der Verriegelungsstellung in Kontakt stehen. In vorteilhafter Weise führt der Kontakt des Riegels mit der ersten Schräge, der zweiten Schräge und dem Verschiebelement während des Brühvorgangs in der Verriegelungsstellung dazu, dass der Riegel zwischen der ersten und zweiten Schräge, sowie dem Rückhalteelement insbesondere derart eingeklemmt wird, dass die die unter hohem Extraktionsdruck stehende Brühkammer eine Kraft über das Rückhaltelement auf den Riegel und dieser wiederum zumindest teilweise auf das Wandungsteil der Brühvorrichtung überträgt, um die Antriebsvorrichtung zu entlasten. Damit wird ein besonders dichter und fester Verschluss der Brühkammer ermöglicht, sodass ein Getränk mittels einer heißen Extraktionsflüssigkeit, insbesondere unter hohem Druck, hergestellt werden kann.

Gemäß einer bevorzugten Ausführungsform der vorliegenden Erfindung ist vorgesehen, dass die zweite Schräge derart ausgebildet ist, dass bei einer Überführung der Verriegelungsmechanik von der Freigabestellung in die Verriegelungsstellung eine Bewegung des Riegels in eine zur axialen Richtung senkrechte Querrichtung in einen von der ersten Schräge und der zweiten Schräge gebildeten Hohlraum hinein bewirkt wird. In vorteilhafter Weise führt die Bewegung des Riegels in den Hohlraum bei der Verriegelungsbewegung dazu, dass die Verriegelungsmechanik ohne einen zusätzlichen vom Benutzer auszuführenden Verriegelungsschritt, beispielsweise das Einfügen eines Verriegelungsbolzens, bedienbar ist. Dadurch wird der Vorteil gegenüber dem Stand der Technik erzielt, dass bei der erfindungsgemäßen Brühvorrichtung der zusätzliche Verriegelungsschritt vom Benutzer nicht vergessen werden kann, sodass dadurch die erfindungsgemäße Brühvorrichtung besonders dicht ist.

Gemäß einer bevorzugten Ausführungsform der vorliegenden Erfindung ist vorgesehen, dass die Arretierung so ausgebildet ist, dass während des Extraktionsprozesses eine vom Rückhaltelement auf den in der Verriegelungsstellung befindlichen Riegel entgegen der axialen Richtung wirkende Rückstellkraft von der ersten Schräge aufgenommen wird. In vorteilhafter Weise führt die von der ersten Schräge aufgenommene in axialer Richtung wirkende Rückstellkraft während des Extraktionsprozesses dazu, dass insbesondere die Antriebsvorrichtung besonders effizient entlastet wird und somit ein besonders dichter und fester Verschluss der Brühkammer ermöglicht wird. Auf diese Weise kann mit einer besonders kostengünstigen erfindungsgemäßen Brühvorrichtung ein Getränk, beispielsweise Espresso, mittels einer heißen Extraktionsflüssigkeit, insbesondere unter hohem Druck hergestellt werden.

Gemäß einer bevorzugten Ausführungsform der vorliegenden Erfindung ist vorgesehen, dass die Verriegelungsmechanik einen Kolben und einen mit dem Kolben drehbar verbundenen Riegel aufweist, welcher zum Eingreifen in eine Öffnung eines Wandungsteils und/oder zur Verriegelung mit wenigstens einem Blockier-Element vorgesehen ist. In vorteilhafter Weise führt das Eingreifen des Riegels in die Öffnung, insbesondere Lücke oder Ausnehmung, des Wandungsteils dazu, dass die Verriegelungsmechanik ohne einen zusätzlichen vom Benutzer auszuführenden Verriegelungsschritt, beispielsweise das Einfügen eines Verriegelungsbolzens, bedienbar ist. Dadurch wird der Vorteil gegenüber dem Stand der Technik erzielt, dass bei der erfindungsgemäßen Brühvorrichtung der zusätzliche Verriegelungsschritt vom Benutzer nicht vergessen werden kann, sodass dadurch die erfindungsgemäße Brühvorrichtung besonders dicht ist. Weiterhin ist es Vorteilhaft möglich, dass die Kräfte, welche vom in der Brühkammer während des Brühvorgangs herrschenden hohen Extraktionsdruck, welcher beispielsweise zum Brühen von Espresso-Getränken erforderlich ist, vom Wandungsteil, insbesondere vollständig, aufgenommen werden, sodass die Antriebsmechanik entlastet wird. Hierdurch wird der weitere Vorteil erzielt, dass eine wesentlich kostengünstigere Brühvorrichtung zur Verfügung gestellt wird.

Gemäß einer bevorzugten Ausführungsform der vorliegenden Erfindung ist vorgesehen, dass der Riegel in der Ladestellung bezogen auf die axiale Richtung angewinkelt angeordnet ist, wobei der Riegel in der Verriegelungsstellung im Wesentlichen senkrecht zur axialen Richtung ausgerichtet ist. In vorteilhafter Weise führt die Schwenkbarkeit des Riegels zwischen einer angewinkelten Anordnung und einer im Wesentlichen senkrecht zu axialen Richtung ausgerichteten Anordnung dazu, dass eine besonders lebensdauerstabile und robuste Brühvorrichtung bereitgestellt wird. Denn eine häufige, insbesondere tägliche Benutzung, der erfindungsgemäßen Brühvorrichtung stellt hohe Ansprüche an die mechanische Stabilität, insbesondere an die Stabilität der Antriebs- und der Verrieglungsmechanik.

Gemäß einer bevorzugten Ausführungsform der vorliegenden Erfindung ist vorgesehen, dass der Riegel eine Gleitfläche zum Gleiten auf einer Führungsfläche eines Verschiebelements des ersten Brühkammerelements aufweist. In vorteilhafter Weise führt die Gleitfläche zum Gleiten auf einer Führungsfläche dazu, dass eine besonders lebensdauerstabile und robuste Brühvorrichtung bereitgestellt wird. Denn eine häufige, insbesondere tägliche Benutzung, der erfindungsgemäßen Brühvorrichtung stellt hohe Ansprüche an die mechanische Stabilität, insbesondere an die Verrieglungsmechanik. Weiterhin ist es vorteilhaft möglich, auf Grund des eine Gleitfläche aufweisenden Riegels und des eine Führungsfläche aufweisenden Verschiebelements eine im Vergleich zum Stand der Technik kostengünstigere und besonders einfach herzustellende Brühvorrichtung zur Verfügung zu stellen.

Gemäß eines weiteren Gegenstandes oder einer bevorzugten Ausführungsform ist vorgesehen, dass die Brühvorrichtung zum Extrahieren einer Portionskapsel ein erstes Brühkammerelement und ein zweites Brühkammerelement aufweist, wobei das erste und/oder das zweite Brühkammerelement entlang einer axialen Richtung von einer Ladestellung, in welcher das erste und das zweite Brühkammerelement voneinander beabstandet sind, in eine Extraktionsstellung, in welcher das erste und das zweite Brühkammerelement eine im Wesentlichen geschlossene Brühkammer bilden, bewegbar ist, wobei die Brühvorrichtung eine Antriebsmechanik zur Bewegung des ersten und/oder zweiten Brühkammerelements aufweist, wobei die Antriebsmechanik einen Handhebel und ein Kniehebelgelenk aufweist, wobei der Handhebel ein erstes Kopplungsteil aufweist und das Kniehebelgelenk ein zweites Kopplungsteil aufweist, wobei das erste und das zweite Kopplungsteil über eine Zahnradverbindung miteinander in Wirkverbindung stehen, um eine Bewegung des Handhebels auf eine Bewegung des Kniehebelgelenks zu übersetzen. In vorteilhafter Weise führt eine derart ausgebildete Antriebsmechanik bei der Verschlussbewegung zur Überführung der Brühvorrichtung von einer Ladestellung in eine Extraktionsstellung dazu, dass eine Verbindung, insbesondere ohne Schlupf, zwischen Antriebsmechanik und dem verschiebbaren Brühkammerelement vorhanden ist, sodass eine besonders stabile Brühvorrichtung mit langer Lebensdauer zur Verfügung steht. Weiterhin ist es vorteilhaft möglich, die Brühvorrichtung mittels eines geringen Kraftaufwands durch ein geeignet gewähltes Übersetzungsverhältnis zu betätigen, sodass innerhalb einer kurzen Wegstrecke mit geringem Kraftaufwand die Brühkammer in die Extraktionsstellung bewegt werden kann.

Gemäß einer bevorzugten Ausführungsform der vorliegenden Erfindung ist vorgesehen, dass das Kniehebelgelenk einen ersten und einen zweiten Kniehebel aufweist, wobei der erste Kniehebel das zweite Kopplungsteil aufweist und der zweite Kniehebel an einer ersten Seite drehbar mit dem ersten Kniehebel verbunden ist und an einer zweiten Seite entlang der axialen Richtung verschiebbar angeordnet ist. In vorteilhafter Weise führt eine derart ausgebildete Antriebsmechanik bei der Verschlussbewegung zur Überführung der Brühvorrichtung von einer Ladestellung in eine Extraktionsstellung dazu, dass eine besonders günstige, benutzerfreundliche Kraftübertragung von einer Handhebelbewegung auf die in axialer Richtung verlaufende Verschlussbewegung zur Überführung der Verriegelungsmechanik von einer Freigabestellung in eine Verriegelungsstellung ermöglicht wird.

Gemäß einer bevorzugten Ausführungsform der vorliegenden Erfindung ist vorgesehen, dass der Riegel an einem Verbindungspunkt verschwenkbar mit dem Rückhalteelement verbunden ist, wobei der Riegel insbesondere in der Verriegelungsstellung der Verriegelungsmechanik zwischen einem fest mit der Brühvorrichtung verbundenen Blockier-Element und einem relativ zum Rückhalteelement verschiebbar angeordneten Verschiebeelement einklemmber ist.

Gemäß einer bevorzugten Ausführungsform der vorliegenden Erfindung ist vorgesehen, dass der Riegel mittels einer Überführung der Verriegelungsmechanik von der Freigabestellung in die Verriegelungsstellung in eine zur axialen Richtung senkrechte Querrichtung um eine durch den Verbindungspunkt hindurch verlaufende Schwenkachse in eine Öffnung eines Wandungsteils der Brühvorrichtung hinein verschwenkbar ist.

Gemäß einer bevorzugten Ausführungsform der vorliegenden Erfindung ist vorgesehen, dass der Riegel mittels einer Relativbewegung des Verschiebeelements relativ zum Rückhalteelement in die Öffnung hinein und/oder aus der Öffnung heraus verschwenkbar ist.

Gemäß einer bevorzugten Ausführungsform der vorliegenden Erfindung ist vorgesehen, dass das Verschiebeelement zur Beaufschlagung des Riegels mit einem Drehmoment um eine senkrecht zur axialen Richtung durch den Verbindungspunkt verlaufende Schwenkachse vorgesehen ist.

Gemäß einer bevorzugten Ausführungsform der vorliegenden Erfindung ist vorgesehen, dass das Blockier-Element zur Baufschlagung des Riegels mit einem weiteren Drehmoment um die Schwenkachse vorgesehen ist, wobei insbesondere das weitere Drehmoment gegensinnig zum Drehmoment ist.

Gemäß eines weiteren Gegenstandes oder einer bevorzugten Ausführungsform der vorliegenden Erfindung ist ein Verfahren zum Betrieb einer Brühvorrichtung vorgesehen, insbesondere der erfindungsgemäßen Brühvorrichtung, wobei in einem ersten Verfahrensschritt ein erstes und/oder ein zweites Brühkammerelement entlang einer axialen Richtung von einer Ladestellung, in welcher das erste und das zweite Brühkammerelement voneinander beabstandet sind, in eine Extraktionsstellung, in welcher das erste und das zweite Brühkammerelement eine im Wesentlichen geschlossene Brühkammer bilden, bewegt wird und in einem zweiten Verfahrensschritt zum Verriegeln der Brühkammer mittels einer Verriegelungsmechanik, welche von einer Freigabestellung in eine Verriegelungsstellung zum Verriegeln der Brühkammer in der Extraktionsstellung überführbar ist, ein Riegel der Verriegelungsmechanik in eine zur axialen Richtung senkrechte Querrichtung verschoben wird. In vorteilhafter Weise führt die Bewegung des Riegels in den Hohlraum bei der Verriegelungsbewegung dazu, dass die Verriegelungsmechanik ohne einen zusätzlichen vom Benutzer auszuführenden Verriegelungsschritt, beispielsweise das manuelle Einfügen eines Verriegelungsbolzens, bedienbar ist. Dadurch wird der Vorteil gegenüber dem Stand der Technik erzielt, dass bei der erfindungsgemäßen Brühvorrichtung der zusätzliche Verriegelungsschritt vom Benutzer nicht vergessen werden kann, sodass dadurch die erfindungsgemäße Brühvorrichtung besonders dicht ist. Zudem muss der hohe Extraktionsdruck innerhalb der Brühkammer bei der Extraktion des Getränks nicht allein durch die Antriebsmechanik aufgenommen werden. Hierdurch wird vorteilhaft eine kostengünstigere und einfacher herzustellende Antriebsmechanik zur Verfügung gestellt. Weiterhin führt ein Schwenken des Riegels um eine zur axialen Richtung senkrechte Schwenkachse im zweiten Verfahrensschritt dazu, dass die Kräfte, welche vom in der Brühkammer während des Brühvorgangs herrschenden hohen Extraktionsdruck, welcher beispielsweise zum Brühen von Espresso-Getränken erforderlich ist, vom Wandungsteil, insbesondere vollständig, aufgenommen werden, sodass die Antriebsmechanik entlastet wird. Hierdurch wird der weitere Vorteil erzielt, dass eine wesentlich kostengünstigere Brühvorrichtung zur Verfügung gestellt wird.

Gemäß einer bevorzugten Ausführungsform der vorliegenden Erfindung ist vorgesehen, dass in einem dritten Verfahrensschritt zum Entriegeln der Brühkammer mittels einer Verriegelungsmechanik der Riegel der Verriegelungsmechanik in Querrichtung verschoben wird, und in einem vierten Schritt das erste und/oder zweite Brühkammerelement entlang der axialen Richtung von der Extraktionsstellung in die Ladestellung zurückbewegt wird. In vorteilhafter Weise führt die Bewegung des Riegels aus dem Hohlraum heraus bei der Verriegelungsbewegung dazu, dass die Verriegelungsmechanik ohne einen zusätzlichen vom Benutzer auszuführenden Verriegelungsschritt, beispielsweise das Entfernen eines Verriegelungsbolzens, bedienbar ist. Dadurch wird der Vorteil gegenüber dem Stand der Technik erzielt, dass bei der erfindungsgemäßen Brühvorrichtung der zusätzliche Verriegelungsschritt vom Benutzer nicht vergessen werden kann, sodass die Brühvorrichtung nicht versehentlich durch einen zu hohen Kraftaufwand zerstört wird und beispielsweise der Handhebel abgebrochen wird.

Gemäß einer bevorzugten Ausführungsform der vorliegenden Erfindung ist vorgesehen, dass während des ersten Verfahrensschritts der Riegel von einer zweiten Schräge eines Verschiebelements des ersten Brühkammerelements in axialer Richtung verschoben wird und während des zweiten Verfahrensschritts der Riegel von der zweiten Schräge in Querrichtung in einer von der ersten Schräge der Wandung der Brühvorrichtung und der zweiten Schräge gebildeten Hohlraum verschoben wird und während des Extraktionsprozesses eine von einem Rückhaltelement des ersten Brühkammerelements auf den Riegel in Verriegelungsstellung entgegen der axialen Richtung wirkende Rückstellkraft im Hohlraum zwischen der ersten Schräge, der zweiten Schräge und dem Rückhalteelement eingeklemmt wird. In vorteilhafter Weise führt das Einklemmen des Riegels in den Hohlraum zwischen der ersten Schräge, der zweiten Schräge und dem Verschiebelement während des Brühvorgangs in der Verriegelungsstellung dazu, dass die unter hohem Extraktionsdruck stehende Brühkammer eine Kraft über das Rückhaltelement auf den Riegel und dieser wiederum zumindest teilweise auf das Wandungsteil der Brühvorrichtung überträgt, um die Antriebsvorrichtung zu entlasten. Damit wird ein besonders dichter und fester Verschluss der Brühkammer ermöglicht, sodass ein Getränk mittels einer heißen Extraktionsflüssigkeit unter hohem Druck hergestellt werden kann.

Gemäß einer bevorzugten Ausführungsform der vorliegenden Erfindung ist vorgesehen, dass während des dritten Verfahrensschritts der Riegel von der ersten Schräge in Querrichtung aus einem von der ersten Schräge und der zweiten Schräge gebildeten Hohlraum heraus bewegt wird und in dem vierten Verfahrensschritt der Riegel von dem Rückhalteelement entgegen der axialen Richtung verschoben wird. In vorteilhafter Weise führt die Bewegung des Riegels aus dem Hohlraum heraus bei der Verriegelungsbewegung dazu, dass die Verriegelungsmechanik ohne einen zusätzlichen vom Benutzer auszuführenden Verriegelungsschritt, beispielsweise das Entfernen eines Verriegelungsbolzens, bedienbar ist. Dadurch wird der Vorteil gegenüber dem Stand der Technik erzielt, dass bei der erfindungsgemäßen Brühvorrichtung der zusätzliche Verriegelungsschritt vom Benutzer nicht vergessen werden kann, sodass die Brühvorrichtung nicht versehentlich durch einen zu hohen Kraftaufwand zerstört wird und beispielsweise der Handhebel abgebrochen wird.

Gemäß einer bevorzugten Ausführungsform der vorliegenden Erfindung ist vorgesehen, dass während des ersten Verfahrensschritts eine Gleitfläche des Riegels auf einer Führungsfläche des Verschiebelements verschoben wird. In vorteilhafter Weise führt eine Verschiebung der Gleitfläche des Riegels auf einer Führungsfläche des Verschiebelements dazu, dass eine besonders lebensdauerstabile und robuste Brühvorrichtung bereitgestellt wird. Denn eine häufige, insbesondere tägliche Benutzung, der erfindungsgemäßen Brühvorrichtung stellt hohe Ansprüche an die mechanische Stabilität, insbesondere an die Verrieglungsmechanik. Weiterhin ist es vorteilhaft möglich, auf Grund des eine Gleitfläche aufweisenden Riegels und des eine Führungsfläche aufweisenden Verschiebelements eine im Vergleich zum Stand der Technik kostengünstigere und besonders einfach herzustellende Brühvorrichtung zur Verfügung zu stellen.

Gemäß einer bevorzugten Ausführungsform der vorliegenden Erfindung ist vorgesehen, dass während des zweiten Verfahrensschritts der Riegel derart geschwenkt wird, dass ein Ende des Riegels in eine Öffnung des Wandungsteils eingreift und/oder von wenigstens einem Blockier-Element bezüglich einer Bewegung in axialer Richtung blockiert wird. In vorteilhafter Weise führt das Eingreifen des Riegels in die Öffnung, insbesondere Lücke oder Ausnehmung, des Wandungsteils dazu, dass die Verriegelungsmechanik ohne einen zusätzlichen vom Benutzer auszuführenden Verriegelungsschritt, beispielsweise das Einfügen eines Verriegelungsbolzens, bedienbar ist. Dadurch wird der Vorteil gegenüber dem Stand der Technik erzielt, dass bei der erfindungsgemäßen Brühvorrichtung der zusätzliche Verriegelungsschritt vom Benutzer nicht vergessen werden kann, sodass dadurch die erfindungsgemäße Brühvorrichtung besonders dicht ist. Weiterhin ist es Vorteilhaft möglich, dass die Kräfte, welche vom in der Brühkammer während des Brühvorgangs herrschenden hohen Extraktionsdruck, welcher beispielsweise zum Brühen von Espresso-Getränken erforderlich ist, vom Wandungsteil, insbesondere vollständig, aufgenommen werden, sodass die Antriebsmechanik entlastet wird. Hierdurch wird der weitere Vorteil erzielt, dass eine wesentlich kostengünstigere Brühvorrichtung zur Verfügung gestellt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Figuren

- Figuren 1a bis 1b: zeigen schematische Schnittbildansichten einer Brühvorrichtung gemäß einer ersten Ausführungsform der vorliegenden Erfindung.
- Figuren 2a bis 2g: zeigen schematische Ansichten einer Verriegelungsmechanik gemäß einer zweiten Ausführungsform der vorliegenden Erfindung.
- Figur 3: zeigt eine schematische Ansicht einer Verriegelungsmechanik gemäß einer dritten Ausführungsform der vorliegenden Erfindung.
- Figuren 4a bis 4e: zeigen schematische Ansichten einer Verriegelungsmechanik gemäß einer vierten Ausführungsform der vorliegenden Erfindung.
- Figuren 5a bis 5c: zeigen schematische Ansichten einer Antriebsmechanik gemäß einer Ausführungsform der vorliegenden Erfindung.
- Figuren 6a bis 6e: zeigen schematische Ansichten einer Verriegelungsmechanik gemäß einer fünften Ausführungsform der vorliegenden Erfindung.
- Figuren 7a bis 7b: zeigen schematische Ansichten einer Verriegelungsmechanik gemäß einer sechsten Ausführungsform der vorliegenden Erfindung.
- Figuren 8a bis 8b: zeigen schematische Ansichten einer Verriegelungsmechanik gemäß einer siebten Ausführungsform der vorligenden Erfindung.
- Figuren 9a bis 9e: zeigen schematische Ansichten einer Verriegelungsmechanik gemäß einer achten Ausführungsform der vorligenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

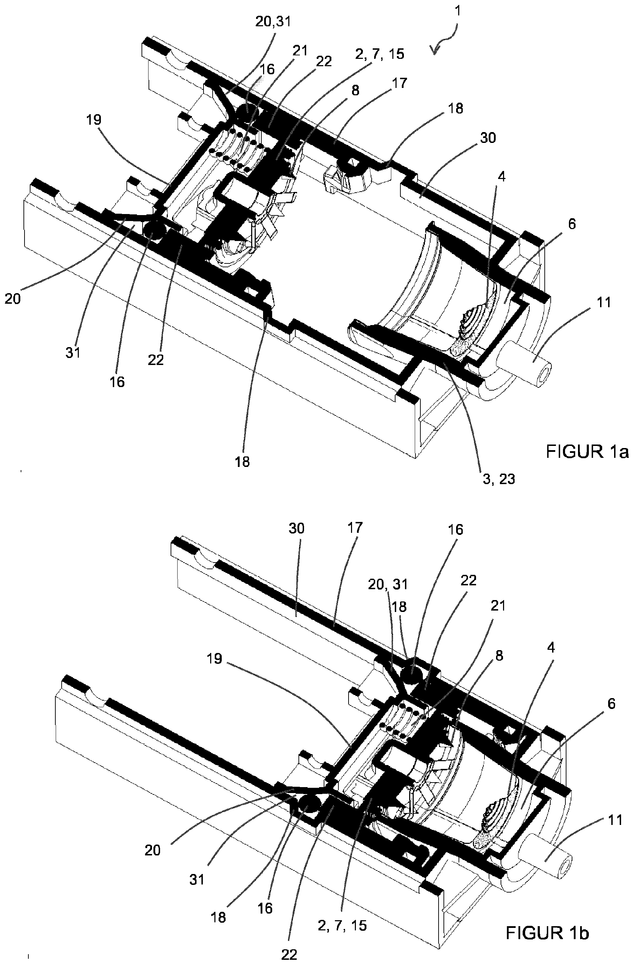

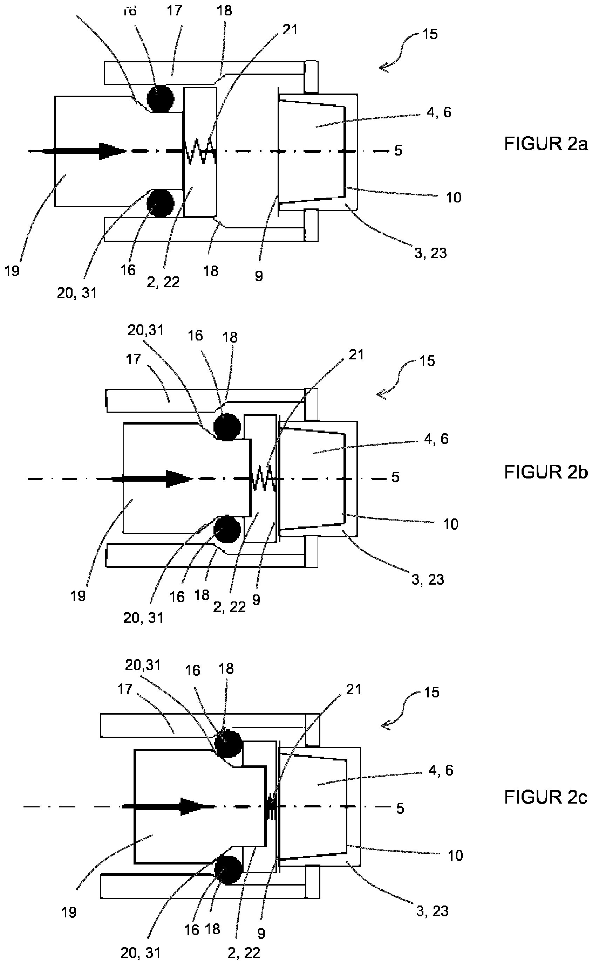

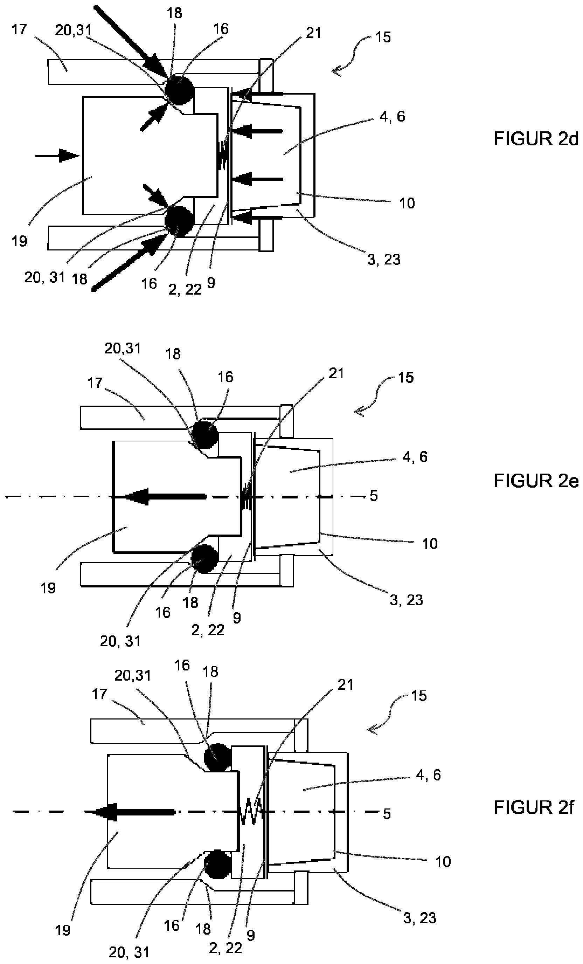

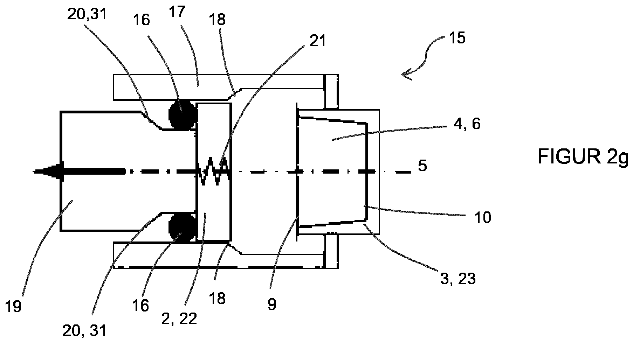

In **Figuren 1a bis 1b** sind schematische Schnittbildansichten einer Brühvorrichtung 1 gemäß einer ersten Ausführungsform der vorliegenden Erfindung dargestellt. Die Brühvorrichtung 1 weist ein erstes Brühkammerelement 2 und ein zweites Brühkammerelement 3 auf, welche in einer Ladestellung voneinander beabstandet sind, sodass eine mit einer Getränkesubstanz (nicht dargestellt) gefüllte Portionskapsel 4 in Laderichtung eingeführt werden kann. Das erste Brühkammerelement 2 ist in axialer Richtung 5 bewegbar, um mit dem zur Aufnahme der Portionskapsel 4 (siehe Figur 2) vorgesehenen zweiten Brühkammerelement 3 eine im Wesentlichen geschlossene Brühkammer 6 zu bilden. Das erste Brühkammerelement 2 umfasst ein Perforationselement 7 mit Perforationsspitzen 8 zur Perforation des Kapseldeckels 9 und einen Wasserzuführkanal (nicht dargestellt) zur Injektion einer Extraktionsflüssigkeit in die Portionskapsel 4 während des Brühvorgangs. Das zweite Brühkammerelement 3 umfasst eine weitere Perforationsspitze (nicht dargestellt) zur Perforation des Kapselbodens 10 und zum Ableiten der Extraktionsflüssigkeit, die mit der Getränkesubstanz im Innern der Portionskapsel 4 wechselgewirkt hat und einen Ablaufkanal 11 zum Ableiten der Extraktionsflüssigkeit in ein Trinkgefäß (nicht dargestellt).

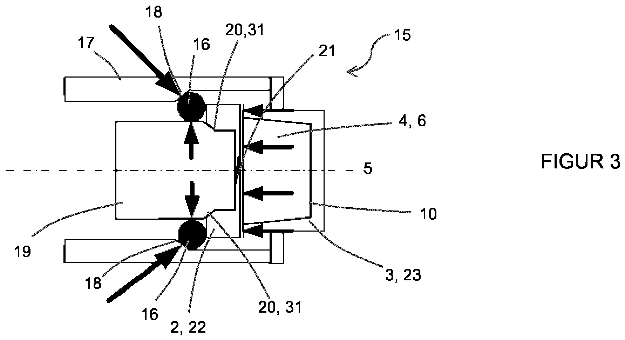

Die Brühvorrichtung 1 weist ferner eine Antriebsmechanik 12, welche bevorzugt als Kniehebelgelenk 13 (siehe Figur 3) ausgebildet ist, zur Überführung des ersten Brühkammerelements 2 und des zweiten Brühkammerelements 3 von der Ladestellung in eine Extraktionsstellung auf. Optional wird das Kniehebelgelenk 13 der Antriebsmechanik 12 von einem Antriebsmotor angetrieben, sodass eine Reduzierung der Leistung des Antriebsmotors im Vergleich zu einer Brühvorrichtung ohne Kniehebelgelenk erzielt wird. Hierdurch ist eine kostensparende Herstellung der erfindungsgemäßen Brühvorrichtung 1 möglich. Bevorzugt wird das Kniehebelgelenk 13 durch den Handhebel 14 manuell betätigt.

Weiterhin ist zwischen der Antriebsmechanik 12 und dem zweiten Brühkammerelement 3 eine separate Verriegelungsmechanik15 angeordnet, wodurch die erforderliche Schließkraft zum hermetischen Verschluss der Brühkammer 6 weiter reduziert und eine noch einfachere und günstigere Ausführung der Brühvorrichtung 1 ermöglicht wird. Die Verriegelungsmechanik 15 umfasst einen bevorzugt als Kugel oder Walze ausgebildeten Riegel 16, eine an einem Wandungsteil 17 der Brühvorrichtung 1 angeordnete erste Schräge 18, eine an einem Verschiebelement 19 des ersten Brühkammerelements 2 angeordnete zweite Schräge 20 und ein mit dem Verschiebelement 19 des ersten Brühkammerelements 2 mit einer Rückstellfeder 21 (siehe Figur 2) verbundenen Rückhalteelement 22. Hierbei ist die Rückstellfeder 21 ganz bevorzugt auf einer sich entlang der axialen Richtung 5 erstreckenden Achse und/oder parallel zu dieser Achse angeordnet.

In **Figur 1a** ist eine schematische Schnittbildansicht einer Brühvorrichtung 1 gemäß der ersten Ausführungsform der vorliegenden Erfindung in Ladestellung dargestellt. Das erste Brühkammerelement 2 und das zweite Brühkammerelement 3 sind derart voneinander beabstandet, dass eine Portionskapsel 4 in senkrecht zur axialen Richtung 5 verlaufenden Laderichtung (senkrecht zur Papierebene in Figur 2) eingeführt werden kann. Bevorzugt ist der Abstand zwischen erstem 2 und zweitem Brühkammerelement 3 hinreichend groß, um ein Verletzungsrisiko des Benutzers durch die an dem Perforationselement 7 des ersten Brühkammerelements 2 angeordneten Perforationsspitzen 8 während des Einführens der Portionskapsel 4 zu minimieren.

Das Kniehebelgelenk 13 der Antriebsmechanik 12 ist in der Ladestellung in einer Knickstellung, sodass mittels eines mit dem Kniehebelgelenk 13 verbundenen Handhebels 14 oder Antriebsmotors (nicht dargestellt) unter Ausnutzung des Hebelgesetzes eine Verschlussbewegung in axialer Richtung 5 schnell und kraftvoll ausgeführt wird.

Die Verriegelungsmechanik 15 ist in der Ladestellung in einer Freigabestellung angeordnet, wobei der Riegel 16 innerhalb eines von dem Wandungsteil 17, dem Rückhalteelement 22 und der zweiten Schräge 20 gebildeten Hohlraums entlang der axialen Richtung 5 mit dem ersten Brühkammerelement 2 mitbewegt wird. Bei einer Bewegung des ersten Brühkammerelements 2 in axialer Richtung 5 von der Ladestellung in die Extraktionsstellung wird der Riegel 16 von der zweiten Schräge 20 angeschoben, wohingegen bei einer Bewegung in entgegengesetzter Richtung 5 das Rückhalteelement 22 den Riegel 16 anschiebt. Hierbei treten bedingt durch die bevorzugt kugel- oder walzenförmige Form des Riegels 16 insbesondere lediglich vernachlässigbare Reibungsverluste bei der Verschiebung des Riegels 16 mit dem ersten Brühkammerelement 2 auf, was sich weiterhin vorteilhaft auf eine kostensparende Ausführung der Antriebsmechanik 12 auswirkt.

In **Figur 1b** ist eine schematische Schnittbildansicht einer Brühvorrichtung 1 gemäß der ersten Ausführungsform der vorliegenden Erfindung in Extraktionsstellung dargestellt. Das erste Brühkammerelement 2 und das zweite Brühkammerelement 3 bilden zusammen eine im Wesentlichen geschlossene Brühkammer 6, worin während des Brühvorgangs eine mit einer Getränkesubstanz gefüllte Portionskapsel 4 positioniert ist, in welche, bevorzugt unter hohem Druck, eine heiße Extraktionsflüssigkeit eingeleitet wird, die mit der Getränkesubstanz wechselwirkt und durch den Ablaufkanal 11 in ein Trinkgefäß abgeleitet wird. Bevorzugt ist die Brühkammer 6 derart hermetisch verriegelt, dass ein Auslaufen der Extraktionsflüssigkeit aus der Brühkammer 6 während des Brühvorgangs auf Grund mangelhafter Abdichtung nicht möglich ist.

Das Kniehebelgelenk 13 der Antriebsmechanik 12 ist in der Extraktionsstellung in einer Streckstellung und nimmt einen Teil derjenigen Kraft vom ersten Brühkammerelement 2 auf, welche aufgrund des hohen Drucks in der Brühkammer 6 während des Brühvorgangs entsteht und auf das erste Brühkammerelement 2 übertragen wird.

Die Verriegelungsmechanik 15 ist in der Extraktionsstellung in einer Verriegelungsstellung angeordnet, wobei der Riegel 16 innerhalb eines von der ersten Schräge 18 des Wandungsteils 17, dem Rückhalteelement 22 und der zweiten Schräge 20 gebildeten Hohlraum eingeklemmt wird. Hierdurch findet eine Übertragung derjenigen Kraft auf das Wandungsteil 17 der Brühkammer 6 statt, welche aufgrund des hohen Drucks in der Brühkammer 6 während des Brühvorgangs entsteht und über das Rückhalteelement 22 des ersten Brühkammerelements 2 auf den Riegel 16 übertragen wird. Diese Kraftübertragung führt vorteilhaft zu einer Entlastung des Kniehebelgelenks 13, wodurch eine geringere Schließkraft, insbesondere während des Brühvorgangs, erforderlich ist, wodurch eine einfachere und günstigere Ausführung der Brühvorrichtung 1 gegenüber dem Stand der Technik ermöglicht wird.

In **Figuren 2a bis 2g** sind schematische Ansichten einer Verriegelungsmechanik 15 gemäß einer zweiten Ausführungsform der vorliegenden Erfindung dargestellt, wobei die einzelnen Schritte zum Verriegeln und Entriegeln der Verriegelungsmechanik 15 genauer erläutert werden.

**Figur 2a** illustriert eine sich in Ladestellung befindende Brühvorrichtung 1 mit einer Verriegelungsmechanik 15 in Freigabestellung. Der Riegel 16 ist dabei zwischen einem Wandungsteil 17 aufweisend eine erste Schräge 18 und einem ersten Brühkammerelement 2 aufweisend ein Verschiebelement 19 mit einer zweiten Schräge, einem Rückhalteelement 22 und einer Rückstellfeder 21, welche das Rückhalteelement 22 mit dem Verschiebelement 19 elastisch verbindet, entlang der axialen Richtung 5 verschiebbar angeordnet. Eine Portionskapsel 4 ist dabei in einem zur Aufnahme der Portionskapsel 4 vorgesehenen glockenförmig ausgestalteten Aufnahmeelement 23 eines fest mit dem Wandungsteil 17 verbundenen zweiten Brühkammerelements 3 positioniert. Die insbesondere kugel- oder walzenförmige Ausgestaltung des Riegels 16 ermöglicht dabei eine besonders leichte und einfache Verschiebung des ersten Brühkammerelements 2 auf Grund der vernachlässigbaren Rollreibung des Riegels 16.

In **Figur 2b** sind das erste Brühkammerelement 2 und das zweite Brühkammerelement 3 in Extraktionsstellung dargestellt, wobei eine im Wesentlichen geschlossene Brühkammer 6 gebildet wird. Hingegen befindet sich die Verriegelungsmechanik 15 in Freigabestellung. Der Riegel 16 ist dabei insbesondere in eine zur axialen Richtung 5 senkrecht verlaufende Querrichtung in einen von der ersten Schräge 18, der zweiten Schräge 20 und dem Rückhalteelement 22 gebildeten Hohlraum verschiebbar angeordnet.

In **Figur 2c** ist illustriert, dass sich das erste und das zweite Brühkammerelement 3 in Extraktionsstellung und die Verriegelungsmechanik 15 in Verriegelungsstellung befinden. Während des Übergangs von der Freigabestellung in die Verriegelungsstellung wird die Rückstellfeder 21 zusammengedrückt, wodurch eine Bewegung des Verschiebelements relativ zum Rückhalteelement 22 bewirkt wird, sodass eine Bewegung der an dem Verschiebelement 19angeordneten zweiten Schräge 20 eine Verschiebung des Riegels 16 in senkrecht zur axialen Richtung 5 verlaufender Querrichtung bewirkt wird. Somit wird der Riegel 16 in den von der ersten Schräge 18 und dem Rückhalteelement 22 gebildeten Hohlraum in Querrichtung eingeschoben und in Verriegelungsstellung zusätzlich von der zweiten Schräge 20 eingeklemmt.

In **Figur 2d** ist die Verriegelungsmechanik 15 während des Brühvorgangs dargestellt. Die Verriegelungsmechanik 15 befindet sich in Verriegelungsstellung, sodass die durch den hohen Extraktionsdruck entstehenden Kräfte während des Brühvorgangs über das Verschiebelement 19auf den Riegel 16 und somit auf das fest mit der Brühvorrichtung 1 verbundenen Wandungsteil 17 übertragen werden. Hierbei werden die Antriebsmechanik 12 und insbesondere das Kniehebelgelenk 13 im Vergleich zum Stand der Technik nur sehr gering belastet.

In **Figur 2e** ist illustriert, dass sich das erste und das zweite Brühkammerelement 3 in Extraktionsstellung und die Verriegelungsmechanik 15 in Verriegelungsstellung befinden, wobei allerdings der hohe Extraktionsdruck nach dem Brühvorgang im Innern der Brühkammer 6 abgebaut ist. Bei einer anschließenden Bewegung entgegen des Verschiebelements entgegen der axialen Richtung 5 und relativ zum Rückhalteelement 22 wird der Riegel 16 von der ersten Schräge 18 in Querrichtung zurück in Freigabestellung bewegt.

In **Figur 2f** sind das erste Brühkammerelement 2 und das zweite Brühkammerelement 3 in Extraktionsstellung dargestellt, wobei eine im Wesentlichen geschlossene Brühkammer 6 gebildet wird. Hingegen befindet sich die Verriegelungsmechanik 15 in Freigabestellung. Der Riegel 16 dabei insbesondere in Querrichtung in einen von der ersten Schräge 18, der zweiten Schräge 20 und dem Rückhalteelement 22 gebildeten Hohlraum verschiebbar angeordnet. Diese Situation entspricht der in Figur 2c dargestellten Anordnung, jedoch mit dem Unterschied, dass eine anschließende Bewegung des ersten Brühkammerelements 2 entgegen der axialen Richtung 5 vorgenommen wird, um die Brühvorrichtung 1 in eine Ladestellung zurückzuführen.

In **Figur 2g** ist die Brühvorrichtung 1 entsprechend Figur 2a in einer teilweise geöffneten Position zwischen der Extraktionsstellung und der Ladestellung dargestellt. Die Verriegelungsmechanik 15 befindet sich in Freigabestellung, sodass der Riegel 16 entgegen der axialen Richtung 5 verschiebbar angeordnet ist. Bei dieser Bewegung zurück in die Ladestellung wird der Riegel 16 entgegen der axialen Richtung 5 vom Rückhalteelement 22 angeschoben. Die kugel- oder walzenförmige Form des Riegels 16 ermöglicht dabei eine besonders leichte und einfache Verschiebung des ersten Brühkammerelements 2, insbesondere auf Grund der vernachlässigbaren Rollreibung des Riegels 16. Bei der Bewegung des ersten Brühkammerelements 2 von der Extraktionsstellung in die Ladestellung wird die Portionskapsel 4 zunächst mittels Greifarmen am Kapselflansch (nicht dargestellt) mitgezogen und fällt anschließend aus der Brühvorrichtung 1 heraus.

In **Figur 3** ist eine schematische Ansicht einer Verriegelungsmechanik 12 gemäß einer dritten Ausführungsform der vorliegenden Erfindung dargestellt. Der Riegel 16 wird gemäß der dritten Ausführungsform der Verriegelungsmechanik 15 in der Verriegelungsstellung lediglich zwischen der ersten Schräge 18, einer zweiten Wandung 31 des Verschiebelements 19 und dem Rückhalteelement 22 eingeklemmt. Hierdurch ist es vorteilhaft möglich, die während des Brühvorgangs entstehenden Kräfte aufgrund des in der Brühkammer herrschenden Extraktionsdrucks ausschließlich auf das fest mit der Brühvorrichtung 1 verbundene Wandungsteil 17 zu übertragen und somit die Antriebsmechanik 12 vollständig zu entlasten.

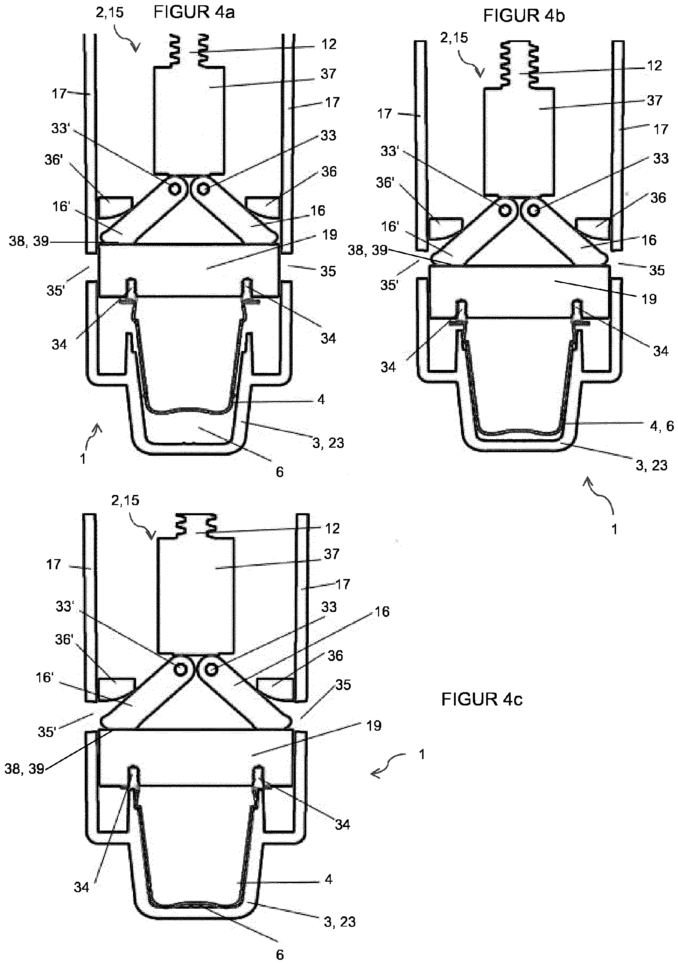

In **Figuren 4a bis 4e** sind schematische Ansichten einer Verriegelungsmechanik 15 gemäß einer vierten Ausführungsform der vorliegenden Erfindung dargestellt. Die Verriegelungsmechanik 15 gemäß der vierten Ausführungsform der vorliegenden Erfindung weist ein entlang der axialen Richtung bewegbares erstes Brühkammerelement 2, eine Öffnung 35, 35' des Wandungsteils 17 und ein Blockier-Element 36, 36' auf. Das erste Brühkammerelement umfasst einen mit der Antriebsmechanik 12 verbundenen und entlang der axialen Richtung bewegbaren Kolben 37, einen mit dem Kolben an einem ersten Ende drehbar um einen Verbindungspunkt 33, 33' angeordneten Riegel 16, 16', welcher eine Gleitfläche 38 aufweist, die mit einer Führungsfläche 39 des Verschiebelements 19 in Kontakt steht. Die Gleitfläche 38 des Riegels ist derart angeordnet, dass bei einer Bewegung des Kolbens 37 in axialer Richtung 5 die Gleitfläche 38 des Riegels 16, 16' entlang der Führungsfläche 39 des Verschiebelements 19 verschoben wird. Die Öffnung 35, 35', beispielsweise in Form einer Lücke, Ausnehmung oder eines auf beliebige Weise geformten Hohlraums des Wandungsteils 17, ist derart angeordnet, dass der Riegel 16, 16' in der Verriegelungsstellung mit einem zweiten Ende des Riegels 16, 16' in die Öffnung 35, 35' eingreift. Das Blockier-Element 36, 36' ist in der Nähe der Öffnung 35, 35' angeordnet und mit dem Wandungsteil 17 fest verbunden, um eine Bewegung des ersten Brühkammerelements 2, insbesondere des Verschiebelements 19, während des Brühvorgangs zu blockieren. Ferner steht der Riegel 16, 16' in der Verriegelungsstellung entlang seiner Haupterstreckungsebene mit dem Verschiebelement 19 flächig in Kontakt, sodass eine Kraft auf Grund eines hohen Extraktionsdrucks innerhalb der Brühkammer während des Brühvorgangs besonders gut von dem Riegel 16, 16' aufgenommen und über das Blockier-Element 36, 36' auf das Wandungsteil 17 übertragen werden kann. Dadurch wird die Antriebsmechanik 12 in besonders vorteilhafter Weise entlastet, wodurch eine im Vergleich mit dem Stand der Technik kostengünstige Brühvorrichtung bereitgestellt wird.

In **Figur 4a** ist die Verriegelungsmechanik 12 der Brühvorrichtung 1 in Ladestellung dargestellt, wobei sich der Riegel 16, 16' bezüglich der axialen Richtung 5 in einer angewinkelten Stellung und sich die Portionskapsel 4 außerhalb einer geöffneten Brühkammer 6 befindet. Der Riegel 16, 16' liegt am Blockier-Element 36, 36' an, sodass eine Bewegung des ersten Brühkammerelements 2 aus der Ladestellung heraus entgegen die axiale Richtung 5 blockiert wird. Eine Bewegung des Kolbens 37 entlang der axialen Richtung 5 aus der Ladestellung heraus führt hingegen zu einer Rotation des Riegels 16 um eine durch den Verbindungspunkt 33 senkrecht zur axialen Richtung 5 verlaufende Achse. Der Riegel (16, 16') ist dabei derart angeordnet, dass dieser von einer bezüglich der axialen Richtung 5 angewinkelten Stellung in der Freigabestellung in eine im Wesentlichen zur axialen Richtung 5 senkrechte Richtung in der Extraktionsstellung geschwenkt werden kann.

In **Figur 4b** ist die Verriegelungsmechanik 12 der Brühvorrichtung 1 nach einer anfänglichen Bewegung des Kolbens 37 in axialer Richtung 5 dargestellt. Aufgrund der Bewegung des Kolbens 37 wird eine Rotation des Riegels 16, 16' um die senkrecht zur axiale Richtung 5 durch den Verbindungspunkt 33, 33' verlaufende Achse bewirkt, sodass die Gleitfläche 38 des Riegels 16, 16' entlang der Führungsfläche 39 des Verschiebelements 19 in Richtung der Öffnung 35, 35' erfolgt. Während dieser Bewegung wird das Verschiebelement 19 in axiale Richtung 5 verschoben, um die Portionskapsel 4 in die Brühkammer 6 einzuschieben.

In **Figur 4c** ist die Verriegelungsmechanik 12 der Brühvorrichtung 1 in Freigabestellung dargestellt, wobei die Brühkammer 6 vom Verschiebelement 19 und zusätzlich mittels eines Dichtungselements 34, insbesondere in Form eines Dichtungsrings, verschlossen wird und somit eine im Wesentlichen geschlossene Brühkammer 6 bildet. Eine weitere Bewegung des Kolbens 37 in axiale Richtung 5 bewirkt eine Überführung der Verriegelungsmechanik in Verriegelungsstellung, da das Verschiebelement 19 auf einem Aufnahmeelement 3 eines zweiten Brühkammerelements 3 aufliegt, sodass eine weitere Bewegung des Verschiebelements 19 in axialer Richtung vom Aufnahmeelement 23 blockiert wird.

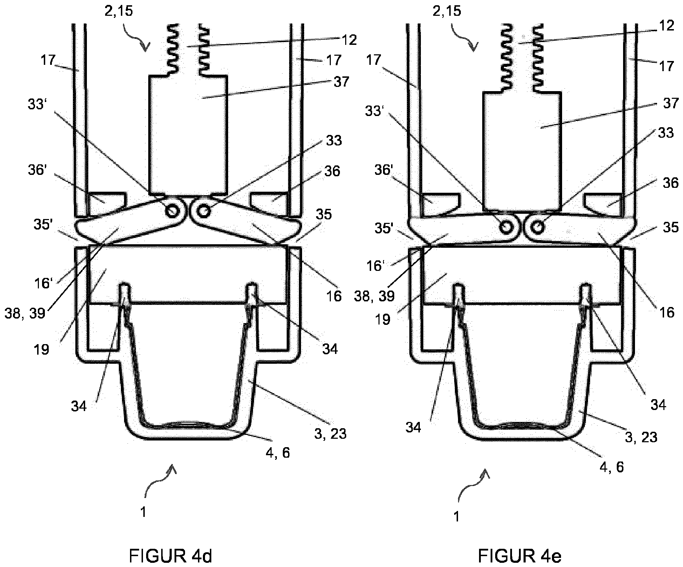

In **Figur 4d** ist die Verriegelungsmechanik 12 der Brühvorrichtung 1 in einer Stellung zwischen Freigabestellung und Verriegelungsstellung dargestellt, wobei die Brühkammer 6 vom Verschiebelement 19 derart verschlossen wird, dass eine im Wesentlichen geschlossene Brühkammer 6 gebildet wird. Aufgrund der Blockierung der Bewegung des Verschiebelements 19 in die axiale Richtung 5 wird bewirkt, dass die Gleitfläche 38 des Riegels 16, 16' senkrecht zur axialen Richtung zur Öffnung 35, 35' hin verschoben wird. Dabei wird der Riegel 16, 16' zusätzlich von einer weiteren am Blockier-Element 36, 36' angeordneten, bevorzugt gekrümmten, weiteren Führungsfläche geführt, wobei das zweite Ende des Riegels 16, 16' in Richtung der Öffnung 35, 35' bewegt wird. Bei einer Bewegung des Kolbens 37 in axiale Richtung 5 aus der Freigabestellung wird über das Verschiebelement 19 ein zusätzlicher Druck auf die im Wesentlichen geschlossene Brühkammer 6 aufgebaut, sodass diese insbesondere hermetisch verschlossen wird. Dadurch wird insbesondere ein Auslaufen der Brühkammer 6 während des Brühvorgangs in besonders einfacher Weise verhindert und eine besonders dichte Brühkammer 6 und eine besonders stabile Brühvorrichtung 1 bereitgestellt.

In **Figur 4e** ist die Verriegelungsmechanik 12 der Brühvorrichtung 1 in Verriegelungsstellung dargestellt, wobei sich die Brühvorrichtung 1 in der Extraktionsstellung befindet und die Brühkammer 6 im Wesentlichen geschlossen ist und in der Extraktionsstellung insbesondere hermetisch verschlossen und verriegelt ist. In der Verriegelungsstellung greift der Riegel 16, 16' in die Öffnung 35, 35' des Wandungsteils 17 ein und ist, insbesondere in Bezug auf eine Haupterstreckungsebene des Riegels 16, 16', im Wesentlichen senkrecht zur axialen Richtung 5 ausgerichtet. Des Weiteren ist der Riegel zwischen dem Verschiebelement 19 und dem Blockier-Element 36, 36' derart angeordnet, dass eine Bewegung des Verschiebelements entgegen der axialen Richtung 5 aus der Extraktionsstellung heraus blockiert wird. Hierdurch ist es vorteilhaft möglich, die Brühkammer 6 während des Brühvorgangs mit einem im Vergleich zum Stand der Technik hohen Extraktionsdruck zu beaufschlagen, und dabei die Brühkammer hermetische zu Verschließen. Dadurch können beispielsweise Kaffeegetränken von besonders guter Qualität, insbesondere Espresso, hergestellt werden. Weiterhin wird der im Innern der hermetische verschlossenen Brühkammer 6 herrschende hohe Extraktionsdruck über das Verschiebelement 19 in besonders effizienter Weise auf den flächig auf dem Verschiebelement 19 aufliegenden Riegel 16, 16' übertragen. Der Extraktionsdruck wird dabei von dem Riegel 16, 16' auf das Blockierelement 36, 36' und insbesondere teilweise auf den Kolben 37, übertragen und von dem fest mit dem Wandungsteil 17 der Brühvorrichtung 1 verbundenen Blockier-Element 36, 36'aufgenommen. Hierdurch wird die Antriebsmechanik entlastet, womit Material und Herstellungskosten auf Grund der geringeren Anforderung an die Antriebsmechanik weiter gesenkt werden können.

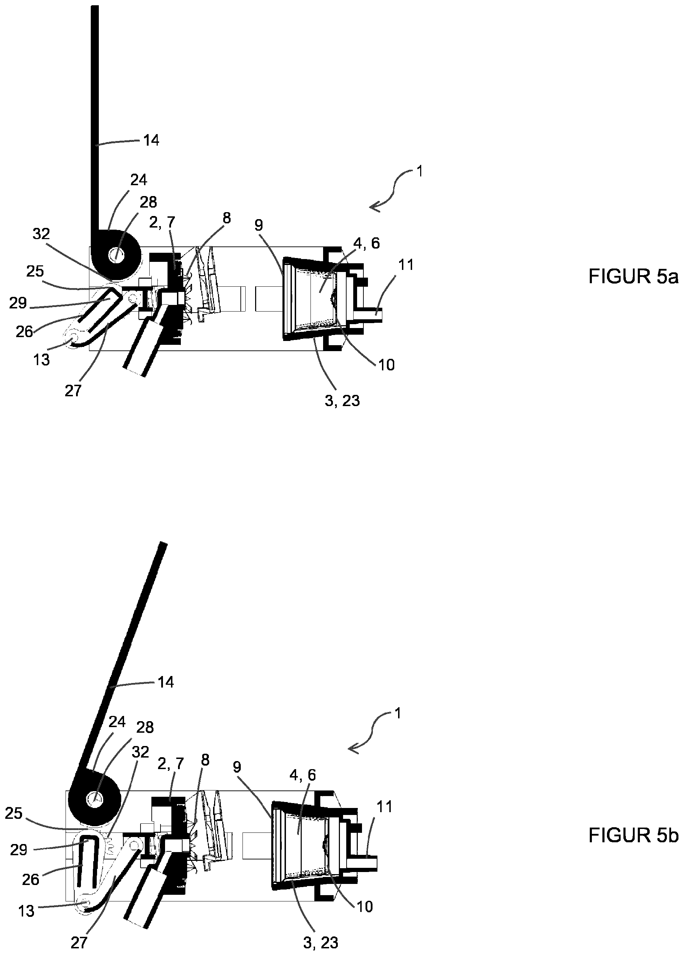

In Figuren **5a bis 5c** sind schematische Ansichten einer Antriebsmechanik 12 gemäß einer Ausführungsform der vorliegenden Erfindung dargestellt. Die Antriebsmechanik 12 weist einen Handhebel 14 mit einem ersten Kopplungsteil 24 und ein Kniehebelgelenk 13 mit einem zweiten Kopplungsteil auf. Das erste Kopplungsteil 24 des Handhebels14 ist um eine erste Verbindungsachse 28 drehbar mit der Brühvorrichtung 1 verbunden und das zweite Kopplungsteil 25 des Kniehebelgelenks 13 ist um eine zweite Verbindungsachse 29 drehbar mit der Brühvorrichtung 1 verbunden. Eine Kraftübersetzung vom Handhebel 14 über das erste Kopplungsteil 24 auf das zweite Kopplungsteil 25 findet dabei mittels einer Zahnradverbindung 32 statt, die zwischen dem ersten und zweiten Kopplungsteil 25 angeordnet ist. Vorteilhaft führt eine derart formschlüssig ausgebildete Zahnradverbindung 32 zu einer besonders stabilen Verbindung, insbesondere ohne Schlupf, zwischen erstem Kopplungsteil 24 und zweitem Kopplungsteil 25. Das Kniehebelgelenk 13 weist einen ersten Kniehebel 26 auf, welcher an einer ersten Seite mit dem zweiten Kopplungsteil 25 verbunden ist und an einer zweiten Seite mit einem zweiten Kniehebel 27 drehbar verbunden ist. Der zweite Kniehebel 27 ist wiederum an einer weiteren zweiten Seite entlang der axialen Richtung 5 verschiebbar angeordnet und vorzugsweise mit dem ersten Brühkammerelement 2 verbunden. Dadurch ist es vorteilhaft möglich unter möglichst geringem Kraftaufwand eine Bewegung des Handhebels 14 in eine schnelle Bewegung des ersten Brühkammerelements 2 zu übersetzen.

Die Länge des ersten Kniehebels 26 beträgt bevorzugt eine Länge zwischen 1 und 50 cm, ganz bevorzugt eine Länge zwischen 10 und 30 cm und ganz besonders bevorzugt eine Länge von ca. 22 cm. Die Länge des zweiten Kniehebels 27 beträgt bevorzugt eine Länge zwischen 1 und 50 cm, ganz bevorzugt eine Länge zwischen 20 und 40 cm und ganz besonders bevorzugt eine Länge von ca. 31 cm. Der erste Kniehebel 26 ist mit dem zweiten Kniehebel 27 drehbar um eine Achse verbunden, wobei die Rotation des ersten Kniehebels 26 um die zweite Verbindungsachse 29 Achse zur Überführung des Kniehebelgelenks 13 von der Knickstellung in die Streckstellung bevorzugt zwischen 80 und 300 Grad, ganz bevorzugt zwischen 120 und 160 Grad und ganz besonders bevorzugt ca. 137 Grad beträgt.

In **Figur 5a** ist die Brühvorrichtung 1 in einer Ladestellung dargestellt, wobei sich der Handhebel 14 in einer geöffneten Position und das Kniehebelgelenk 13 in einer Knickstellung befindet. Der Handhebel 14 weist eine Haupterstreckungsrichtung auf, welche sich in der geöffneten Position des Handhebels 14 im Wesentlichen senkrecht zur axialen Richtung 5, insbesondere senkrecht zur Haupterstreckungsebene der Brühvorrichtung 1, erstreckt.

In **Figur 5b** ist die Brühvorrichtung 1 in einer Stellung zwischen der Ladestellung und der Extraktionsstellung dargestellt. Bei einer Verschlussbewegung des Handhebels 14 wird der Handhebel 14 um die erste Verbindungsachse 28 rotiert, wobei mittels einer Zahnradverbindung 32 die Rotationsbewegung des ersten Kopplungsteils 24 auf das zweite Kopplungsteil 25 übertragen wird. Bevorzugt weist das erste Kopplungsteil 24 einen größeren Radius als das zweite Kopplungsteil 25 auf, sodass eine Übersetzung der Rotationsbewegung des ersten Kopplungsteils 24 auf eine Rotationsbewegung des zweiten Kopplungsteils 25 in besonders vorteilhafter Weise unter geringem Kraftaufwand zu einer schnellen Rotationsbewegung des zweiten Kopplungsteils 25 führt.

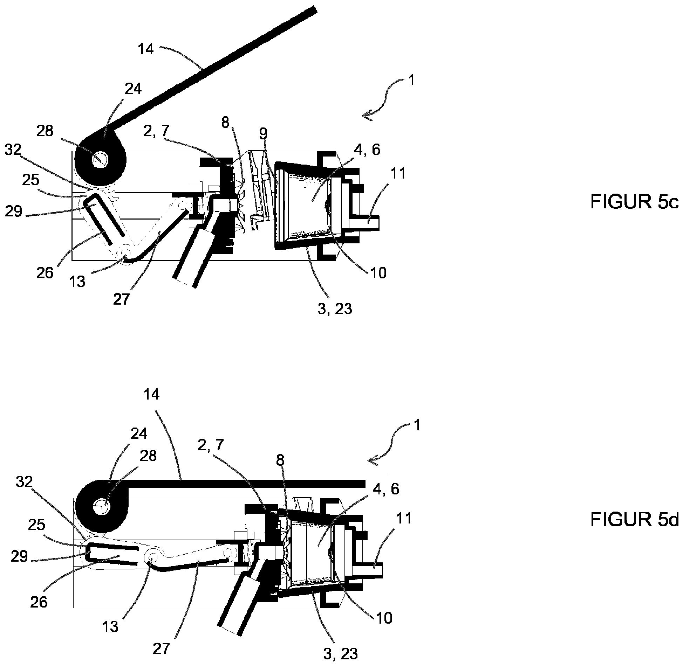

In **Figur 5c** ist die Brühvorrichtung 1 in einer weiteren Stellung zwischen der Ladestellung und der Extraktionsstellung dargestellt. Während der Handhebel 14 lediglich um einen geringfügigen Winkel um die erste Verbindungsachse 28 in Richtung Verschlussposition rotiert wurde, ist auf Grund der schnelleren Rotationsbewegung des zweiten Kopplungsteils 25 der erste Kniehebel 26 um relativ zum Handhebel 14 um einen größeren Winkel um die zweite Rotationsachse rotiert worden. Hierdurch wird eine besonders schnelle Überführung des Kniehebelgelenks 13 von einer Knickstellung in eine Streckstellung erzielt, wodurch das mit dem Kniehebelgelenk 13 verbundene erste Brühkammerelement 2 mit besonders hoher Geschwindigkeit von der Ladestellung in eine Extraktionsstellung bewegbar ist.

In **Figur 5d** ist die Brühvorrichtung 1 in der Extraktionsstellung dargestellt. Hierbei ist der Handhebel 14 in Verschlussposition mit der Haupterstreckungsrichtung im Wesentlich parallel zur Brühvorrichtung 1 und entlang der axialen Richtung 5 ausgerichtet. Das Kniehebelgelenk 13 ist in die Streckposition überführt, wodurch das erste Brühkammerelement 2 mit dem zweiten Brühkammerelement 3 in Kontakt steht und eine im Wesentlichen geschlossene Brühkammer 6 bildet.

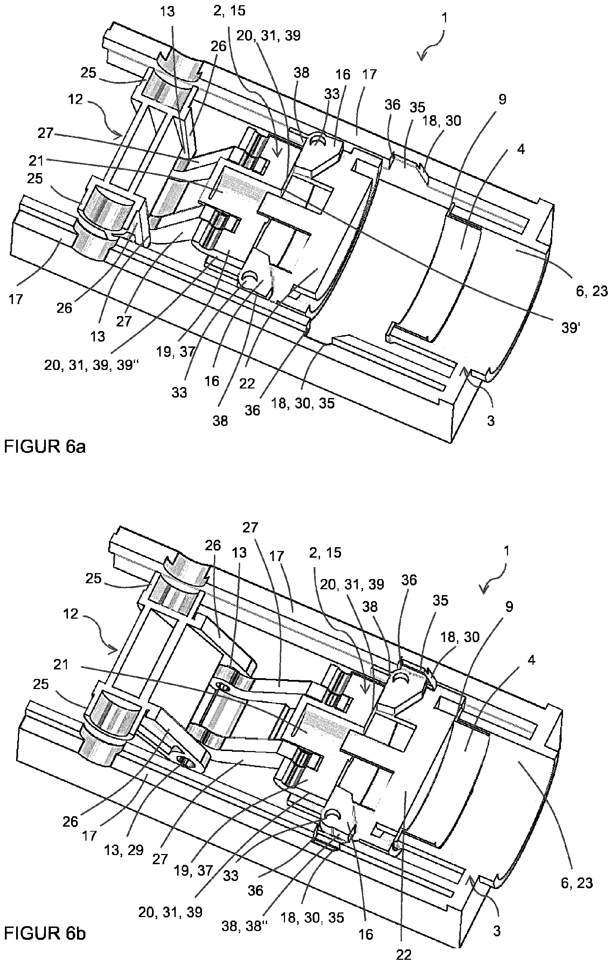

In **Figuren 6a bis 6e** sind schematische Ansichten einer Verriegelungsmechanik 15 gemäß einer fünften Ausführungsform der vorliegenden Erfindung dargestellt. Die Verriegelungsmechanik 15 gemäß der fünften Ausführungsform der vorliegenden Erfindung weist ein entlang der axialen Richtung 5 verschiebbares erstes Brühkammerelement 2 und ein zweites Brühkammerelement 3 auf, wobei das erste Brühkammerelement 2 in der Ladestellung von dem zweiten Brühkammerelement 3 derart beabstandet ist, dass eine Portionskapsel 4 in eine zur axialen Richtung 5 senkrechte Laderichtung (nicht dargestellt) einführbar ist. Das erste Brühkammerelement 2 ist entlang der axialen Richtung 5 in eine Extraktionsstellung bewegbar, um mit dem zweiten Brühkammerelement 3 eine im Wesentlichen geschlossene Brühkammer 6, insbesondere während des Brühvorgangs, zu bilden. Bevorzugt ist am ersten Brühkammerelement 2 ein Perforationselement 7 ausgebildet (siehe Figur 1), welches Perforationsspitzen 8 zur Perforation des Kapseldeckels 9 der Portionskapsel 4, sowie einen Wasserzuführkanal zur Injektion einer Extraktionsflüssigkeit in die Portionskapsel 4 während des Brühvorgangs aufweist. Am zweiten Brühkammerelement 3 sind bevorzugt eine weitere Perforationsspitze zur Perforation des Kapselbodens 10, sowie ein Ablaufkanal 11 zum Ableiten der mit der Getränkesubstanz im Innern der Portionskapsel 4 wechselwirkenden Extraktionsflüssigkeit in ein Trinkgefäß (nicht dargestellt) ausgebildet.

Die Antriebsmechanik 12 zur Bewegung des ersten Brühkammerelements 2 von der Ladestellung in die Extraktionsstellung gemäß der fünften Ausführungsform weist als Antriebselement ein Kniehebelgelenk 13 mit einem ersten Kniehebel 26 und einem zweiten Kniehebel 27 auf. Die Antriebsmechanik 12 ist bevorzugt mittels eines nicht dargestellten Handhebels 14 betätigbar, wobei ein erstes Kopplungsteil 24 des Handhebels 14 über eine Zahnradverbindung 32 mit dem drehbar an dem Wandungsteil 17 der Brühvorrichtung 1 angeordneten zweiten Kopplungsteil 25 in Wirkverbindung steht, um eine Bewegung des Handhebels 14 auf eine Bewegung des Kniehebelgelenks 13 mit dem ersten Kniehebel 26 und dem zweiten Kniehebels 27 zu übertragen. Der zweite Kniehebel ist bevorzugt mit dem ersten Brühkammerelement 2 bewegbar verbunden, um eine Bewegung des ersten Brühkammerelements 2 zwischen der Ladestellung und der Extraktionsstellung mittels der Antriebsmechanik 12 zu bewirken.

Weiterhin weist die Brühvorrichtung 1 gemäß der fünften Ausführungsform eine separate Verriegelungsmechanik 15 zum Verriegeln der Brühkammer 6 in der Extraktionsstellung auf. Die Verriegelungsmechanik 15 weist ein Verschiebeelement 19, welches auch als Kolben 37 bezeichnet wird, ein entlang der axialen Richtung 5 relativ zum Verschiebeelement 19 bewegbares und elastisch mittels einer Rückstellfeder 21 mit dem Verschiebeelement 19 verbundenes Rückhalteelement 22, sowie einen Riegel 16 auf.

Der Riegel 16 ist an einem Verbindungspunkt 33 drehbar mit dem Rückhalteelement 22 des ersten Brühkammerelements 2 verbunden und entlang der axialen Richtung 5 im Bereich des Wandungsteils 17 der Brühvorrichtung 1 in einer Freigabestellung, insbesondere in der Ladestellung, verschiebbar angeordnet. Weiterhin ist der Riegel 16 zum Eingreifen in eine Öffnung 35 des Wandungsteils 17 und/oder zur Verriegelung mit wenigstens einem an dem Wandungsteil 17 der Brühvorrichtung angeordneten und fest mit dem Wandungsteil 17 verbundenen Blockier-Element 36 in einer Verriegelungsstellung konfiguriert.

Das Verschiebeelement 19 weist eine Führungsfläche 39 mit einer ersten Führungsseite 39' (in Figur 6a dargestellt) und einer zweiten Führungsseite 39" (in Figur 6a dargestellt) auf, wobei die erste Führungsseite 39' in der Freigabestellung am Riegel 16 anliegt und eine senkrecht zur axialen Richtung 5 und senkrecht zur Laderichtung angeordnete erste Haupterstreckungsebene aufweist. Die zweite Führungsseite 39" der Führungsfläche 39 des Verschiebeelements 19 weist eine parallel zur axialen Richtung und senkrecht zur Laderichtung angeordnete zweite Haupterstreckungsebene auf. Die zweite Haupterstreckungsebene der zweiten Führungsseite 39" ist besonders bevorzugt parallel zu einer weiteren Haupterstreckungsebene einer Wandung 30 des Wandungsteils 17 der Brühvorrichtung 1 und von der weiteren Haupterstreckungsebene derart beabstandet, dass das Verschiebeelement 19 ein Drehmoment auf den Riegel 16 erzeugt.

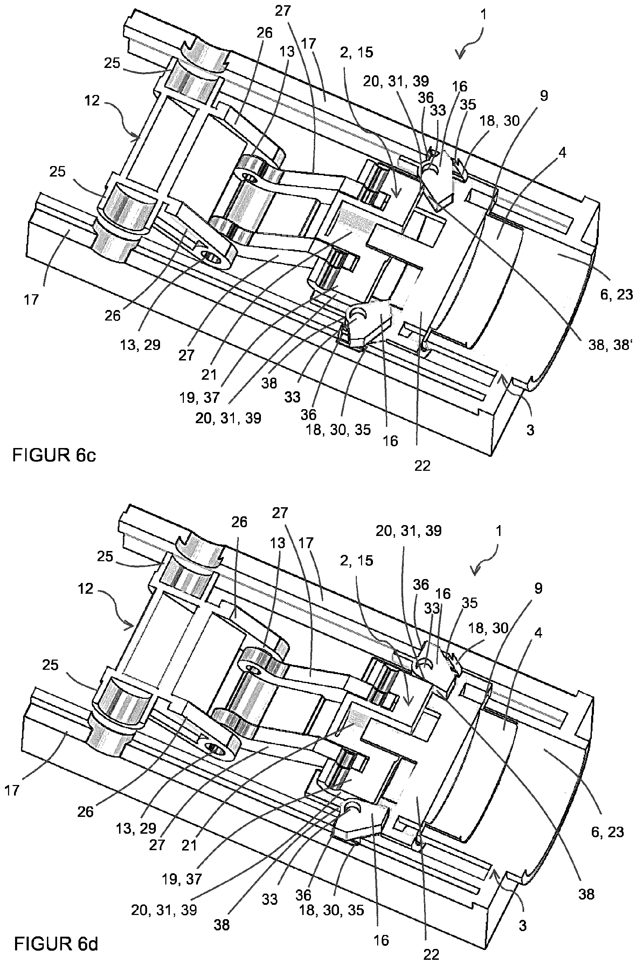

Der Riegel 16 weist eine Gleitfläche 38 mit einer ersten Gleitseite 38' (in Figur 6c dargestellt) und einer zweiten Gleitseite 38" (in Figur 6b dargestellt) auf, wobei die erste Gleitseite 38' in der Freigabestellung an der ersten Führungsseite 39' der Führungsfläche 39 des Verschiebeelements 19 anliegt und parallel zur ersten Führungsseite 39' angeordnet ist und wobei die zweite Gleitseite 38" parallel zur zweiten Führungsseite 39", parallel zur Wandung 30 des Wandungsteils 17 und gleitend an der Wandung 30 der Brühvorrichtung 1 angeordnet ist.

In **Figur 6a** ist die Verriegelungsmechanik 15 der Brühvorrichtung 1 in Ladestellung dargestellt. Bevorzugt ist das erste Brühkammerelement 2 in der Ladestellung derart von dem zweiten Brühkammerelement 3 beabstandet, dass ein einfaches Einführen der Portionskapsel 4 in Laderichtung möglich ist. Der Riegel 16 wird in der Ladestellung auf Grund des an der ersten Gleitseite 38' der Gleitfläche 38 anliegenden Verschiebeelements19 und/oder der Verbindung am Verbindungspunkt 33 bei einer Bewegung entlang der axialen Richtung mit dem ersten Brühkammerelement 2 mitbewegt. Bei einer Bewegung des ersten Brühkammerelements 2 entlang der axialen Richtung wird von dem sich in Freigabestellung befindlichen Riegel 16 keine Drehbewegung um den Verbindungspunkt 33 ausgeführt. Insbesondere wird bei einer Verschiebung des ersten Brühkammerelements 2 entlang der axialen Richtung 5 durch die Ausrichtung der zweiten Gleitseite 38" des Riegels 16 parallel zur weiteren Haupterstreckungsebene der Wandung 30 des Wandungsteils 17 und durch die Anordnung der zweiten Gleitseite 38" des Riegels 16 gleitend an der Wandung 30 des Wandungsteils 17 eine Drehbewegung des Riegels 16 um den Verbindungspunkt 33 blockiert.

In **Figur 6b** ist die Verriegelungsmechanik 15 der Brühvorrichtung 1 nach einer anfänglichen Bewegung des Kolbens 37 in axiale Richtung 5 dargestellt. Der Riegel 16 befindet sich noch in der Freigabestellung, wobei die erste Gleitseite 38' der Gleitfläche 38 des Riegels 16 an der ersten Führungsseite 39' der Führungsfläche 39 des Verschiebeelements 19 anliegt und parallel zu dieser ausgerichtet ist. Das erste Brühkammerelement 2 und das zweite Brühkammerelement 3 befinden sich in der Extraktionsstellung und bilden eine im Wesentlichen geschlossene Brühkammer 6. Dabei liegt das Rückhalteelement 22 des ersten Brühkammerelements 2 auf dem Kapseldeckel 9 und/oder dem Aufnahmeelement 23 der Portionskapsel 4 derart an, dass eine weitere Bewegung des Rückhalteelements 22 in axiale Richtung 5 eine Relativbewegung des Verschiebeelements 19 zum mittels der Rückstellfeder 21 verbundenen Rückhalteelement 22 bewirkt wird. Die erste Führungsseite 39' der Führungsfläche 39 des Verschiebeelements 19 liegt derart an der ersten Gleitseite 38' der Gleitfläche 38 des Riegels 16 an, dass bei einer weiteren Bewegung des Verschiebeelements 19 in axiale Richtung 5 vom Verschiebeelement 19 ein Drehmoment auf den Riegel 16 erzeugt wird. Eine weitere Bewegung des Verschiebeelements 19 bzw. des Kolbens 37 entlang der axialen Richtung 5 aus der Ladestellung in die Extraktionsstellung führt somit zu einer Drehbewegung bzw. Schwenkbewegung des Riegels 16 um eine durch den Verbindungspunkt 33 senkrecht zur axialen Richtung 5 verlaufende Achse.

Auf Grund der weiteren Bewegung des Verschiebeelements 19 wird eine Rotation des Riegels 16 um die senkrecht zur axiale Richtung 5 durch den Verbindungspunkt 33 verlaufende Achse bewirkt, wobei die erste Gleitseite 38' der Gleitfläche 38 des Riegels 16 auf der ersten Führungsseite 39' der Führungsfläche 39 des Verschiebeelements 19 des ersten Brühkammerelements 2 gleitet und die zweite Gleitseite 38" der Gleitfläche 38 des Riegels 16 in Richtung der Öffnung 35 in eine Verriegelungsstellung geschwenkt wird.

In **Figur 6c** ist die Verriegelungsmechanik 15 der Brühvorrichtung 1 zwischen der Freigabestellung und der Verriegelungsstellung dargestellt, wobei die Brühkammer 6 vom Rückhalteelement 22 verschlossen wird und somit eine im Wesentlichen geschlossene Brühkammer 6 bildet. Eine weitere Bewegung des Verschiebeelements 19 in axiale Richtung 5 bewirkt eine Verriegelungsbewegung der Verriegelungsmechanik 15 in Verriegelungsstellung. Die erste Führungsseite 39' der Führungsfläche oder der Eckbereich zwischen der ersten Führungsseite 39' und der zweiten Führungsseite 39" der Führungsfläche 39 des Verschiebeelements 19 gleitet während der Verriegelungsbewegung auf der ersten Gleitseite 38' der Gleitfläche 38 des Riegels 16 bis die zweite Gleitseite 38" der Gleitfläche des Riegels an dem Blockier-Element 36 anliegt. Die zweite Gleitseite 38" der Gleitfläche 38 des Riegels 16 wird dabei senkrecht zur axialen Richtung zur Öffnung 35 hin verschoben. Dabei wird der Riegel 16 zusätzlich von einer weiteren im Bereich der Öffnung 35 angeordneten weiteren Führungsfläche einer ersten Schräge 18 der Wandung 30 des Wandungsteils 17 geführt. Bei einer Bewegung des Verschiebeelements 19 in axiale Richtung 5 aus der Freigabestellung in die Extraktionsstellung wird über das Verschiebeelement 19 ein zusätzlicher Druck auf die im Wesentlichen geschlossene Brühkammer 6 aufgebaut, sodass diese insbesondere hermetisch verschlossen wird. Dadurch wird insbesondere ein Auslaufen der Brühkammer 6 während des Brühvorgangs in besonders einfacher Weise verhindert und eine besonders dichte und stabile Brühvorrichtung 1 bereitgestellt.

In **Figur 6d** ist die Verriegelungsmechanik 15 der Brühvorrichtung 1 zwischen der Freigabestellung und der Verriegelungsstellung dargestellt, wobei die Brühkammer 6 vom Rückhalteelement 22 verschlossen wird und somit eine im Wesentlichen geschlossene Brühkammer 6 bildet. Eine Schwenkbewegung des Riegels 16 um den Verbindungspunkt 33 wird auf Grund der an dem Blockier-Element 36 anliegenden zweiten Gleitseite 38" der Gleitfläche 38 des Riegels 16 blockiert. Dadurch befindet sich der Riegel 16 in der Verriegelungsstellung. Das Verschiebeelement 19 ist in axiale Richtung entgegen der Rückstellkraft der Rückstellfeder 21 relativ zum am Aufnahmeelement 23 aufliegenden und relativ zum in der Öffnung 35 in Verriegelungsstellung befindlichen Riegel 16 weiter verschiebbar angeordnet, um das Kniehebelgelenk von einer im Wesentlichen angewinkelten Stellung, wobei der erste Kniehebel 26 und der zweite Kniehebel 27 einen Winkel von weniger als 180 Grad, bevorzugt zwischen 160 und 179 Grad, um die zweite Verbindungsachse 29 bilden in eine Streckstellung zu überführen, wobei der Winkel zwischen erstem Kniehebel 26 und zweitem Kniehebel 27 um die zweite Verbindungsachse 29, besonders bevorzugt genau, 180 Grad beträgt.

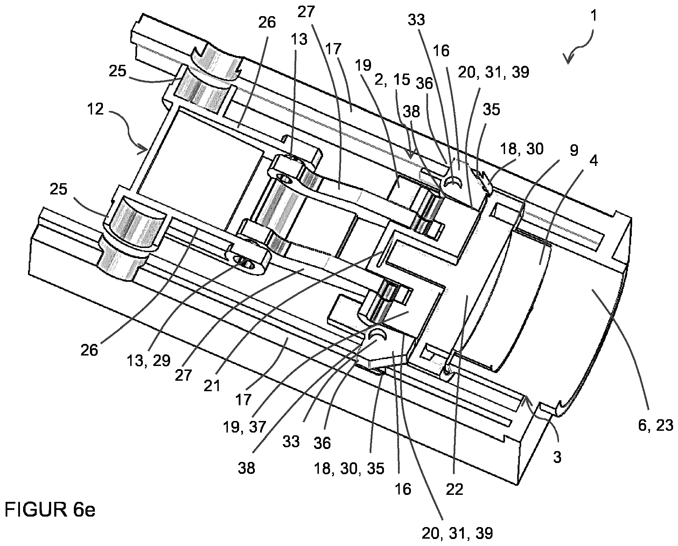

In **Figur 6e** ist die Verriegelungsmechanik 15 der Brühvorrichtung 1 in Verriegelungsstellung dargestellt, wobei sich die Brühvorrichtung 1 in der Extraktionsstellung befindet und die Brühkammer 6 im Wesentlichen geschlossen und in der Extraktionsstellung insbesondere hermetisch verschlossen und verriegelt ist. In der Verriegelungsstellung greift der Riegel 16 in die Öffnung 35 des Wandungsteils 17 ein und ist mit der zweiten Gleitseite 38" der Gleitfläche 38 im Wesentlichen senkrecht zur axialen Richtung 5 ausgerichtet. Des Weiteren ist das Kniehebelgelenk 13 in einer Streckstellung derart angeordnet, dass eine Bewegung des Verschiebeelements entgegen der axialen Richtung 5 aus der Extraktionsstellung heraus von dem Antriebselement, insbesondere dem Kniehebelgelenk 13, blockiert wird. Hierdurch ist es vorteilhaft möglich, die Brühkammer 6 während des Brühvorgangs mit einem im Vergleich zum Stand der Technik hohen Extraktionsdruck zu beaufschlagen, und dabei die Brühkammer 6 hermetisch zu Verschließen. Dadurch können beispielsweise Kaffeegetränke von besonders guter Qualität, insbesondere Espresso, hergestellt werden. Weiterhin wird der im Innenraum der hermetisch verschlossenen Brühkammer 6 herrschende hohe Extraktionsdruck über das Rückhalteelement 22 und den Kolben 37 bzw. das Verschiebeelement 19 in besonders effizienter Weise auf eine aus erstem Kniehebel 26, Kniehebelgelenk 13 und zweitem Kniehebel 27 gebildeten Achse des Antriebselements und auf den flächig mit der zweiten Gleitseite 38" der Gleitfläche 38 des Riegels 16 auf dem Blockier-Element 36 aufliegenden Riegel 16 übertragen. Der Extraktionsdruck wird dabei teilweise von dem Riegel 16 auf das Blockier-Element 36 übertragen und von dem fest mit dem Wandungsteil 17 der Brühvorrichtung 1 verbundenen Blockier-Element 36'aufgenommen. Besonders bevorzugt weist die Brühvorrichtung 1 zwei an einander entgegengesetzten Positionen angeordnete Riegel 16 auf, welche eine Kraft senkrecht zur axialen Richtung 5 und senkrecht zur Laderichtung jeweils kompensieren. Bei einer Entriegelung der Verriegelungsmechanik 15 wird das Kniehebelgelenk 13 von der Streckstellung zurück in die Knickstellung überführt, wobei die Rückstellkraft der Rückstellfeder 21 eine Bewegung des Verschiebeelements 19 relativ zum Rückhalteelement 22 entgegen der axialen Richtung 5 bewirkt und die Entriegelungsbewegung, besonders vorteilhaft für den Benutzer, unterstützt.

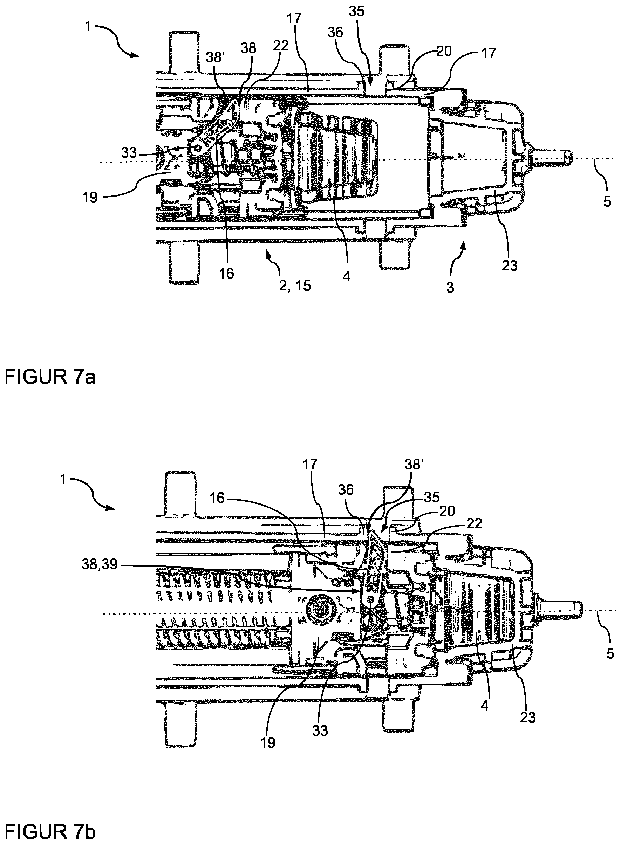

In **Figuren 7a bis 7b** sind schematische Ansichten einer Verriegelungsmechanik 15 gemäß einer sechsten Ausführungsform der vorliegenden Erfindung dargestellt, welche im Wesentlichen der in Figuren 4a bis 4e beschriebenen vierten Ausführungsform entspricht. Die Verriegelungsmechanik 15 gemäß der sechsten Ausführungsform der vorliegenden Erfindung weist ein entlang der axialen Richtung bewegbares erstes Brühkammerelement 2, eine Öffnung 35 des Wandungsteils 17 und ein Blockier-Element 36 auf. Das erste Brühkammerelement 2 weist einen eine Haupterstreckungsrichtung aufweisenden Riegel 16 auf, welcher an einem ersten Ende an einem Verbindungspunkt 33 mit dem Verschiebeelement 19 verbunden ist. Hierbei ist der Riegel 16 um den Verbindungspunkt 33 verschwenkbar.

In **Figur 7a** ist die Verriegelungsmechanik 15 in der Freigabestellung dargestellt. Der Riegel 16 weist eine Gleitfläche 38 auf, wobei die Gleitfläche 38 zum Entlanggleiten des Riegels 16 entlang des Rückhalteelements 22 vorgesehen ist. Bei einer Bewegung des Verschiebeelements 19 in axialer Richtung 5 relativ zum Rückhalteelement 22 gleitet der Riegel 16 derart an dem Rückhalteelement entlang, dass ein dem ersten Ende entlang der Haupterstreckungsrichtung gegenüberliegendes zweites Ende des Riegels 16 in die Öffnung 35 hinein bewegt wird.

In **Figur 7b** ist die Verreigelungsmechanik 15 in der Verriegelungsstellung dargestellt. Hier greift das zweite Ende des Riegels 16 in die Öffnung 35 ein, sodass die von dem ersten Brühkammerelement 2 und dem zweiten Brühkammerelement 3 gebildete Brühkammer 6 verriegelt wird. Das Blockier-Element 36 ist hierbei zur Aufnahme Kräften vorgesehen, die von dem Riegel 16 auf ein Wandungsteil 17 der Brühvorrichtung 1 übertragenen werden. Beispielsweise wird eine Kraft auf Grund eines hohen Extraktionsdrucks innerhalb der Brühkammer 6 während des Brühvorgangs von dem Riegel 16 aufgenommen und über das Blockier-Element 36 auf das Wandungsteil 17 übertragen.

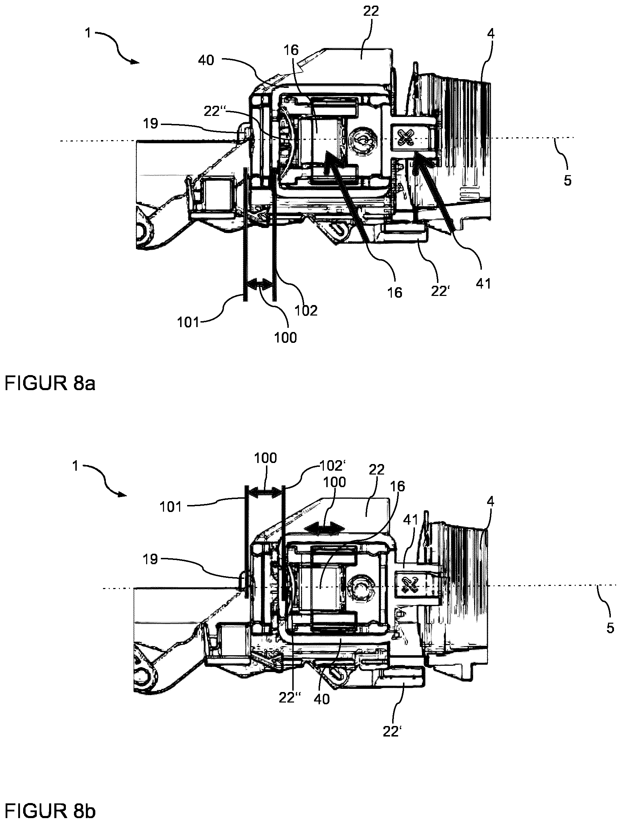

In **Figuren 8a bis 8b** sind schematische Ansichten einer Verriegelungsmechanik 15 gemäß einer siebten Ausführungsform der vorliegenden Erfindung dargestellt. Hier ist ein erstes Brühkammerelement 2 in einer Seitenansicht dargestellt. Hier liegt die Portionskapsel 4 auf einem Rückhaltearm 22' auf, welcher hier fest mit dem Rückhalteelement 22 verbunden ist. Hier weist das erste Brühkammerelement 2 eine Haltevorrichtung 40 auf. Die Haltevorrichtung 40 umfasst hier insbesondere einen weiteren Rückhaltearm 41, welcher zum Halten der Portionskapsel 4 in ihrer nach der Beschickung der Brühvorrichtung 1 eingenommenen Position vorgesehen ist. Hier ist die Haltevorrichtung 40 über eine an dem Rückhalteelement 22 befestigten Rückhaltefeder 22' relativ zu dem Rückhalteelement 22 beweglich angeordnet. Hier ist beispielhaft eine Bewegung der Haltevorrichtung 40 entlang einer zur axialen Richtung 5 parallelen Bewegungsrichtung 100 relativ zum Rückhalteelement 22 durch einen Pfeil 100 angedeutet, wobei die Haltevorrichtung 40 zwischen einer ersten Halteposition 101 und einer zweiten Halteposition 102 bewegbar ist. Insbesondere ist die Haltevorrichtung 40 zumindest teilweise rahmenartig den Riegel 16 umgebend ausgebildet. Die Haltevorrichtung 40 ist insbesondere derart ausgebildet, dass der Riegel 16 in eine senkrecht zu einer Haupterstreckungsebene der Haltevorrichtung 40 und zur axialen Richtung 5 verlaufende Querrichtung einschwenkbar und ausschwenkbar ist. In Figuren 8a und 8b sind jeweils zwei mögliche Positionen der Haltevorrichtung 40 relativ zum Rückhalteelement 22 dargestellt, wobei in Figur 8b die Haltevorrichtung in einer weiteren zweiten Halteposition 102' angeordnet ist, wobei der Abstand zwischen der ersten Halteposition 101 und der weiteren zweiten Halteposition 102' entlang der axialen Richtung 5 größer ist, als der in Figur 8a dargestellte Abstand zwischen der ersten Halteposition 101 und der zweiten Halteposition 102.

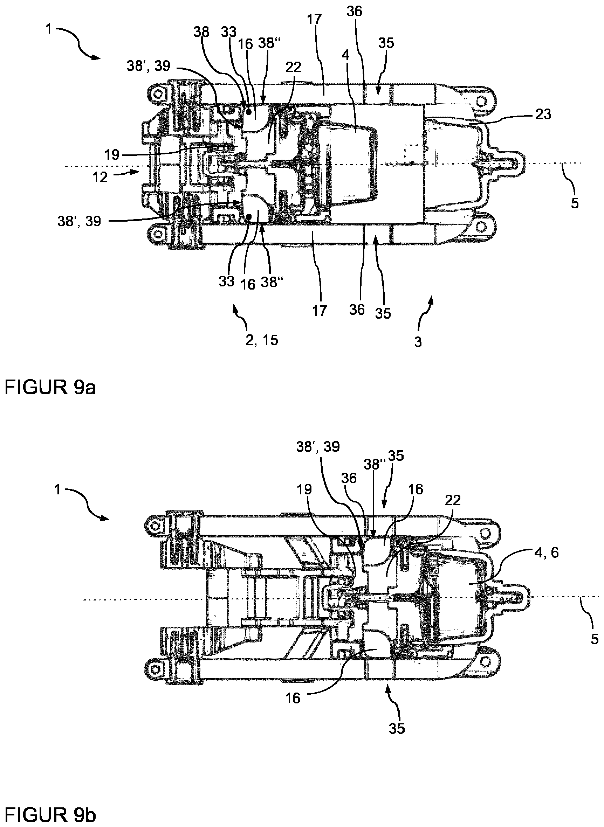

In **Figuren 9a bis 9e** sind schematische Ansichten einer Verriegelungsmechanik 15 gemäß einer achten Ausführungsform der vorligenden Erfindung dargestellt. Hier umfasst die Brühvorrichtung 1 ein erstes Brühkammerelement 2 und ein zweites Brühkammerelement 3, wobei hier das erste Brühkammerelement 2 entlang der axialen Richtung 5 von der Ladestellung, in welcher das erste Brühkammerelement 2 und das zweite Brühkammerelement 3 voneinander beabstandet sind, in eine Extraktionsstellung, in welcher das erste Brühkammerelement 2 und das zweite Brühkammerelement 3 eine im Wesentlichen geschlossene Brühkammer 6 bilden, relativ zum zweiten Brühkammerelement 3 bewegbar ist. An dem zweiten Brühkammerelement 3 ist insbesondere ein Aufnahmeelement 23 zur Aufnahme einer Portionskapsel 4 in der Extraktionsstellung angeordnet. Die Brühvorrichtung 1 weist hier eine Antriebsmechanik 12 zur Bewegung des ersten Brühkammerelements 2 auf. Die Brühvorrichtung 1 weist hier eine separate Verriegelungsmechanik 15 zum Verriegeln der Brühkammer 6 in der Extraktionsstellung auf. Hier ist die Verriegelungsmechanik 15 von einer Freigabestellung in eine Verriegelungsstellung zum Verriegeln der Brühkammer 6 in der Extraktionsstellung überführbar. Insbesondere umfasst die Verrieglungsmechanik 15 wenigstens zwei entlang einer zur axialen Richtung 5 senkrechten Querrichtung - hier parallel zur Zeichenebene - an gegenüberliegenden Seiten angeordnete Riegel 16. Alternativ weist die Verriegelungsmechanik genau einen, drei, vier oder mehr Riegel 16 auf, wobei die Riegel 16 jeweils gleichartig ausgebildet sind. Nachfolgend wird die Verriegelungsmechanik beispielhaft anhand eines solchen Riegels 16 beschrieben. Hier ist der Riegel 16 insbesondere im Wesentlichen derart ausgebildet, dass der Riegel 16 um einen Verbindungspunkt 33 verschwenkbar mit dem ersten Brühkammerelement 2, insbesondere dem Rückhalteelement 22, verbunden ist.

In **Figur 9a** ist die Brühvorrichtung 1 in der Freigabestellung dargestellt, wobei insbesondere die Portionskapsel 4 bereits in der Brühvorrichtung 1 angeordnet ist. Hier weist das erste Brühkammerelement 2 ein Rückhaltelement 22 und ein Verschiebelement 19 auf, wobei das Rückhalteelement 22 und das Verschiebeelement 19 elastisch, insbesondere mittels einer Rückstellfeder 21 (nicht dargestellt), miteinander verbunden sind und wobei das Rückhalteelement 22 entlang der axialen Richtung 5 gegenüber dem Verschiebelement 19 verschiebbar ist. Hier ist der Riegel 16 insbesondere an einem Verbindungspunkt 33 mit dem ersten Brühkammerelement 2 verbunden. Insbesondere ist der Riegel 16 relativ zum ersten Brühkammerelement 2 um eine durch den Verbindungspunkt 33 verlaufende Schwenkachse verschwenkbar angeordnet. Bevorzugt ist die Schwenkachse senkrecht zur axialen Richtung 5 angeordnet. Bevorzugt ist der Riegel 16 über den Verbindungspunkt 33 mit dem Rückhalteelement 22 verbunden. Der Riegel 16 ist in der Freigabestellung zwischen dem ersten Brühkammerelement 2 und dem Wandungsteil 17 entlang der axialen Richtung 5 zusammen mit dem ersten Brühkammerelement 2 verschiebbar. Hier weist der Riegel eine Gleitfläche 38 auf, wobei insbesondere bei einer Bewegung des ersten Brühkammerelements 2 zwischen der Ladestellung und der Extraktionsstellung entlang der axialen Richtung 5 die Gleitfläche 38 im Wesentlichen derart mit dem Wandungsteil 17 in Wirkkontakt steht, dass der Riegel 16 eingeschwenkt ist. Hier umfasst die Gleitfläche 38 eine erste Gleitseite 38' und eine zweite Gleitseite 38", wobei insbesondere die zweite Gleitseite 38" eine Haupterstreckungsebene aufweist, welche in der Freigabestellung im Wesentlichen parallel zu einer Haupterstreckungsrichtung des Wandungsteils 17, insbesondere parallel zur axialen Richtung 5, angeordnet ist. An dem Wandungsteil 17 ist hier eine Öffnung 35 angeordnet, wobei die Öffnung 35 insbesondere zur Aufnahme eines ausgeschwenkten Riegels 16 in der Verriegelungsstellung vorgesehen ist, sodass die Brühkammer 6 mittels des mit einem Blockier-Element 36 in der Extraktionsstellung in Wirkkontakt stehenden Riegels 16 hermetisch verriegelbar ist. Hier ist das Blockier-Element 36 als eine Wandung des Wandungsteils 17 im Bereich der Öffnung 35 ausgebildet. Hier wird die Portionskapsel 4 von dem ersten Brühkammerelement 2 entlang der axialen Richtung 5 in das Aufnahmeelement 23 des zweiten Brühkammerelements 3 verschoben, bis das erste Brühkammerelement 2 und das zweite Brühkammerelement 3 aneinander anliegen und die Brühkammer 6 bilden.

In **Figur 9b** bilden das erste Brühkammerelement 2 und das zweite Brühkammerelement 3 eine Brühkammer 6, in welcher die Portionskapsel 4 angeordnet ist. Hier ist die Verriegelungsmechanik 15 in der Freigabstellung dargestellt. Insbesondere ist hier der Riegel 16 in einem Bereich der Öffnung 35 des Wandungsteils 17 angeordnet, wenn das erste Brühkammerelement 2 an dem zweiten Brühkammerelement 3 anliegt. Hier ist die Haupterstreckungsebene der zweiten Gleitseite 38" im Wesentlichen parallel zur axialen Richtung 5 bzw. parallel zur Haupterstreckungsrichtung der Wandung 17 angeordnet. Insbesondere ist der Riegel hierbei derart im Bereich der Öffnung 35 angeordnet, dass der Riegel 16 in eine zur axialen Richtung 5 senkrechte Querrichtung in die Öffnung 35 des Wandungsteils 17 hinein verschwenkbar - d.h. ausschwenkbar - ist. Durch eine Verriegelungsbewegung des ersten Brühkammerelement 2 entlang der axialen Richtung 5 - d.h. auf das zweite Brühkammerelement 3 zu - wird der Riegel anschließend in die Öffnung 35 hinein verschwenkt - d.h. eingeschwenkt.

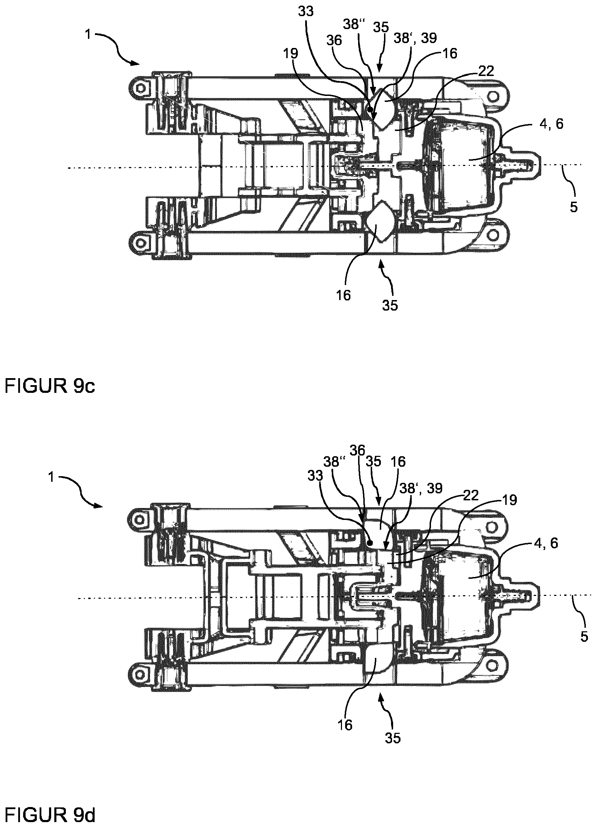

In **Figur 9c** ist die Verriegelungsmechanik 15 während des Übergangs von der Freigabestellung in die Verriegelungsstellung dargestellt. Hier wird der Riegel 16 während der Verriegelungsbewegung mittels einer Relativbewegung des Verschiebeelements 19 relativ zu dem Rückhalteelement 22 verschwenkt. Insbesondere wird mittels dieser Relativbewegung ein Drehmoment erzeugt, sodass das Verschwenken des Riegels 16 in die Öffnung 35 hinein bewirkt wird. Hier weist das Verschiebelement 19 eine Führungsfläche 39 auf, wobei die Führungsfläche 39 während der Relativbewegung in Wirkkontakt mit der ersten Gleitseite 38' des Riegels 16 steht. Hier wird der Riegel 16 insbesondere solange verschwenkt, bis die zweite Gleitseite 38" der Gleitfläche 38 des Riegels 16 an dem Blockier-Element 36 anschlägt.

In **Figur 9d** ist die Verrielgungsmechanik 15 in der Verriegelungsstellung dargestellt, wobei die zweite Gleitseite 38" an dem Blockier-Element 36 aufliegt. Hierbei ist der Riegel 16 derart ausgebildet, dass der Riegel 16 in der Verriegelungsstellung zwischen dem Verschiebelement 19 und dem Blockier-Element 36 in der Öffnung 35 eingeklemmt ist. Insbesondere weist der Riegel 16 hier in Draufsicht eine Form eines Kreissektors auf, wobei der Verbindungspunkt 33 im Wesentlichen im Bereich des Mittelpunkts 33 des Kreissektors angeordnet ist, wobei hier im Wesentlichen ein erster Kreisradius 38' durch die erste Gleitseite 38' und ein zweiter Kreisradius 38" durch die zweite Gleitseite 38" gebildet wird. Insbesondere beträgt ein zwischen dem ersten Kreisradius 38' und dem zweiten Kreisradius 38" eingeschlossener Winkel bevorzugt zwischen 45 und 135 Grad, besonders bevorzugt zwischen 70 und 110 Grad, ganz besonders bevorzugt ungefähr 90 Grad. In der Extraktionsstellung befindet sich die Verriegelungsmechanik 15 hier gleichzeitig in der Verrieglungsstellung, wobei die Brühkammer 6 hermetisch abgedichtet und verriegelt ist.

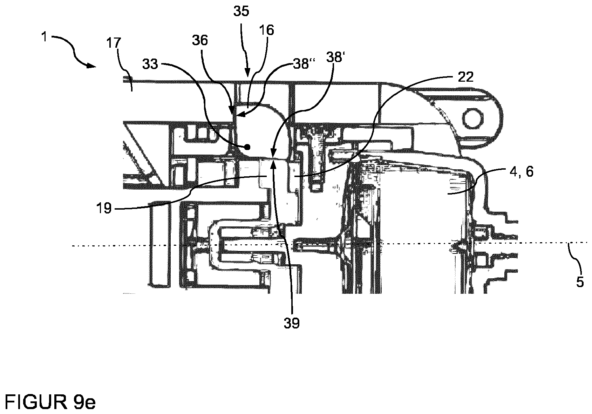

In **Figur 9e** ist die Brühvorrichtung 1 in der Extraktionsstellung dargestellt, wobei die Verriegelungsmechanik 15 die Verriegelungsstellung aufweist. Figur 9e ist im Wesentlichen eine vergrößerten Ansicht der Figur 9d. In der Verriegelungsstellung ist der Riegel 16 hier derart zwischen dem Verschiebeelement 19 und dem Blockier-Element 36 eingeklemmt, dass der um den Verbindungspunkt verschwenkbare 33 Riegel 16 eine von dem Verschiebeelement 19 ausgehende Kraft in die zur axialen Richtung 5 senkrechte Querrichtung über das Blockier-Element 36 auf das Wandungsteil 17 der Brühvorrichtung 1 überträgt. Hierbei wird insbesondere durch das an der Führungsfläche 39 mit der ersten Gleitseite 38' in Wirkkontakt stehende Verschiebeelement 19 ein Zurückschwenken des Riegels 16 aus der Öffnung 35 heraus verhindert. Bei einer Entriegelungsbewegung - beispielsweise nach Abschluss eines Brühvorgangs - wird zunächst das Verschiebeelement 19 relativ zu dem Rückhalteelement 22 entlang der axialen Richtung 5 von dem zweiten Brühkammerelement 3 wegbewegt, sodass der Riegel 16 wieder aus der Öffnung 35 heraus zurück verschwenkbar ist. Anschließend wird der Riegel 16 erst durch eine Bewegung des ersten Brühkammerelements 2 in die Ladestellung entlang der axialen Richtung 5 mit dem Rückhalteelement 22 mitbewegt. Hierbei wird der Riegel 16 durch eine Relativbewegung des Blockier-Elements 36 gegenüber dem Riegel 16 mit einem Drehmoment beaufschlagt, sodass der Riegel 16 aus der Öffnung herausgeschwenkt wird und die Verriegelungsmechanik 15 die Freigabestellung aufweist.

### BEZUGSZEICHENLISTE

- 1: Brühvorrichtung
- 2: Erstes Brühkammerelement
- 3: Zweites Brühkammerelement
- 4: Portionskapsel
- 5: Axiale Richtung
- 6: Brühkammer
- 7: Perforationselement
- 8: Perforationsspitzen
- 9: Kapseldeckel
- 10: Kapselboden
- 11: Ablaufkanal
- 12: Antriebsmechanik
- 13: Kniehebelgelenk
- 14: Handhebel
- 15: Verriegelungsmechanik
- 16: Riegel
- 16': Weiterer Riegel
- 17: Wandungsteil
- 18: Erste Schräge
- 19: Verschiebelement
- 20: Zweite Schräge
- 21: Rückstellfeder
- 22: Rückhalteelement
- 22': Rückhaltearm
- 22": Rückhaltefeder
- 23: Aufnahmeelement
- 24: Erstes Kopplungsteil
- 25: Zweites Kopplungsteil
- 26: Erster Kniehebel
- 27: Zweiter Kniehebel
- 28: Erste Verbindungsachse
- 29: Zweite Verbindungsachse
- 30: Erste Wandung
- 31: Zweite Wandung
- 32: Zahnradverbindung
- 33: Verbindungspunkt
- 33': Weiterer Verbindungspunkt
- 34: Dichtungselement
- 35: Öffnung
- 35': Weitere Öffnung
- 36: Blockier-Element
- 36': Weiteres Blockier-Element
- 37: Kolben
- 38: Gleitfläche
- 38': Erste Gleitseite
- 38": Zweite Gleitseite
- 39: Führungsfläche
- 39': Erste Führungsseite
- 39": Zweite Führungsseite
- 40: Haltevorrichtung
- 41: Weiterer Rückhaltearm
- 100: Bewegungsrichtung
- 101: Erste Halteposition
- 102: Zweite Halteposition
- 102': Weitere zweite Halteposition

## Patentansprüche

1. Brühvorrichtung (1) zum Extrahieren einer Portionskapsel (4) mit einem ersten Brühkammerelement (2) und einem zweiten Brühkammerelement (3), wobei das erste (2) und/oder das zweite Brühkammerelement (3) entlang einer axialen Richtung (5) von einer Ladestellung, in welcher das erste (2) und das zweite Brühkammerelement (3) voneinander beabstandet sind, in eine Extraktionsstellung, in welcher das erste (2) und das zweite Brühkammerelement (3) eine im Wesentlichen geschlossene Brühkammer (6) bilden, bewegbar ist, wobei die Brühvorrichtung (1) eine Antriebsmechanik (12) zur Bewegung des ersten (2) und/oder zweiten Brühkammerelements (3) aufweist, **dadurch gekennzeichnet, dass** die Brühvorrichtung (1) eine separate Verriegelungsmechanik (15) zum Verriegeln der Brühkammer (6) in der Extraktionsstellung aufweist.

2. Brühvorrichtung (1) nach Anspruch 1, **dadurch gekennzeichnet, dass** die Antriebsmechanik (12) ein Antriebselement aufweist, welches bevorzugt als Kniehebelgelenk (13), Zahnstange, Spindel und/oder ein Schwenkgetriebe ausgebildet ist.

3. Brühvorrichtung (1) nach einem der vorhergehenden Ansprüche, **dadurch gekennzeichnet, dass** die Antriebsmechanik (12) bevorzugt manuell mittels eines Handhebels (14) betätigbar ist und/oder automatisch mittels eines Antriebsmotors antreibbar ist.

4. Brühvorrichtung (1) nach einem der vorhergehenden Ansprüche, **dadurch gekennzeichnet, dass** die Verriegelungsmechanik (15) von einer Freigabestellung in eine Verriegelungsstellung zum Verriegeln der Brühkammer (6) in der Extraktionsstellung überführbar ist.

5. Brühvorrichtung (1) nach einem der vorhergehenden Ansprüche, **dadurch gekennzeichnet, dass** die Verriegelungsmechanik (15) einen Riegel (16) aufweist, wobei der Riegel (16) bevorzugt walzenförmig oder kugelförmig ausgebildet ist.

6. Brühvorrichtung (1) nach einem der vorhergehenden Ansprüche, **dadurch gekennzeichnet, dass** das erste Brühkammerelement (2) ein Rückhaltelement, wenigstens eine Rückstellfeder (21) und ein Verschiebelement (19) aufweist, wobei das Rückhalteelement (22) und das Verschiebeelement mittels einer Rückstellfeder (21) verbunden sind und wobei das Rückhalteelement (22) gegenüber dem Verschiebelement (19) verschiebbar ist.

7. Brühvorrichtung (1) nach einem der vorhergehenden Ansprüche, **dadurch gekennzeichnet, dass** der wenigstens eine Riegel (16) in der Freigabestellung zwischen dem ersten Brühkammerelement (2) und dem Wandungsteil (17) entlang der axialen Richtung (5) verschiebbar ist.

8. Brühvorrichtung (1) nach einem der vorhergehenden Ansprüche, **dadurch gekennzeichnet, dass** eine erste Wandung (30) eines fest mit der Brühvorrichtung (1) verbundenen Wandungsteils (17) wenigstens eine erste Schräge (18) und eine zweite Wandung (31) des Verschiebelements (19) wenigstens eine zweite Schräge (20) aufweist, wobei die erste Schräge (18), die zweite Schräge (20) und das Rückhalteelement (22) mit dem Riegel (16) in der Verriegelungsstellung in Kontakt stehen.

9. Brühvorrichtung (1) nach einem der vorhergehenden Ansprüche, **dadurch gekennzeichnet, dass** die zweite Schräge (20) derart ausgebildet ist, dass bei einer Überführung der Verriegelungsmechanik (15) von der Freigabestellung in die Verriegelungsstellung eine Bewegung des Riegels (16) in eine zur axialen Richtung (5) senkrechte Querrichtung in einen von der ersten Schräge (18) und der zweiten Schräge (20) gebildeten Hohlraum hinein bewirkt wird.

10. Brühvorrichtung (1) nach einem der vorhergehenden Ansprüche, **dadurch gekennzeichnet, dass** die Arretierung so ausgebildet ist, dass während des Extraktionsprozesses eine vom Rückhaltelement auf den in der Verriegelungsstellung befindlichen Riegel (16) entgegen der axialen Richtung (5) wirkende Rückstellkraft von der ersten Schräge (18) aufgenommen wird.

11. Brühvorrichtung (1) nach einem der Ansprüche 1 bis 4, **dadurch gekennzeichnet, dass** die Verriegelungsmechanik (15) einen Kolben (37) und einen mit dem Kolben (37) drehbar verbundenen Riegel (16) aufweist, welcher zum Eingreifen in eine Öffnung (35) eines Wandungsteils (17) und/oder zur Verriegelung mit wenigstens einem Blockier-Element (36) vorgesehen ist.

12. Brühvorrichtung (1) nach einem der vorhergehenden Ansprüche, **dadurch gekennzeichnet, dass** die Antriebsmechanik (12) einen Handhebel (14) und ein Kniehebelgelenk (13) aufweist, wobei der Handhebel (14) ein erstes Kopplungsteil (24) aufweist und das Kniehebelgelenk (13) ein zweites Kopplungsteil (25) aufweist, wobei das erste und das zweite Kopplungsteil (25) über eine Zahnradverbindung (32) miteinander in Wirkverbindung stehen, um eine Bewegung des Handhebels (14) auf eine Bewegung des Kniehebelgelenks (13) zu übersetzen.

13. Verfahren zum Betrieb einer Brühvorrichtung (1) nach einem der vorhergehenden Ansprüche, **dadurch gekennzeichnet, dass** in einem ersten Verfahrensschritt ein erstes (2) und/oder ein zweites Brühkammerelement (3) entlang einer axialen Richtung (5) von einer Ladestellung, in welcher das erste (2) und das zweite Brühkammerelement (3) voneinander beabstandet sind, in eine Extraktionsstellung, in welcher das erste (2) und das zweite Brühkammerelement (3) eine im Wesentlichen geschlossene Brühkammer (6) bilden, bewegt wird und in einem zweiten Verfahrensschritt zum Verriegeln der Brühkammer (6) mittels einer Verriegelungsmechanik (15), welche von einer Freigabestellung in eine Verriegelungsstellung zum Verriegeln der Brühkammer (6) in der Extraktionsstellung überführbar ist, ein Riegel (16) der Verriegelungsmechanik (15) in eine zur axialen Richtung (5) senkrechte Querrichtung verschoben wird und/oder der Riegel (16) um eine zur axialen Richtung (5) senkrechte Schwenkachse geschwenkt wird.

14. Verfahren nach Anspruch 13, **dadurch gekennzeichnet, dass** in einem dritten Verfahrensschritt zum Entriegeln der Brühkammer (6) mittels einer Verriegelungsmechanik (15) der Riegel (16) der Verriegelungsmechanik (15) in Querrichtung verschoben wird, und in einem vierten Schritt das erste (2) und/oder zweite Brühkammerelement (3) entlang der axialen Richtung (5) von der Extraktionsstellung in die Ladestellung zurückbewegt wird.

15. Verfahren nach Anspruch 13, **dadurch gekennzeichnet, dass** während des ersten Verfahrensschritts der Riegel (16) von einer zweiten Schräge (20) eines Verschiebelements des ersten Brühkammerelements (2) in axialer Richtung (5) verschoben wird und während des zweiten Verfahrensschritts der Riegel (16) von der zweiten Schräge (20) in Querrichtung in einer von der ersten Schräge (18) der Wandung der Brühvorrichtung (1) und der zweiten Schräge (20) gebildeten Hohlraum verschoben wird und während des Extraktionsprozesses eine von einem Rückhaltelement des ersten Brühkammerelements (2) auf den Riegel (16) in Verriegelungsstellung entgegen der axialen Richtung (5) wirkende Rückstellkraft im Hohlraum zwischen der ersten Schräge (18), der zweiten Schräge (20) und dem Rückhalteelement (22) eingeklemmt wird.

## Claims

1. Brewing apparatus (1) for extracting a portion capsule (4), having a first brewing chamber element (2) and a second brewing chamber element (3), wherein the first (2) and/or the second brewing chamber element (3) are/is movable along an axial direction (5) from a loading position, in which the first (2) and the second brewing chamber element (3) are spaced apart from one another, into an extracting position, in which the first (2) and the second brewing chamber element (3) form a substantially closed brewing chamber (6), wherein the brewing apparatus (1) displays a drive mechanism (12) for moving the first (2) and/or second brewing chamber element (3), **characterized in that** the brewing apparatus (1) displays a separate locking mechanism (15) for locking the brewing chamber (6) in the extracting position.

2. Brewing apparatus (1) according to Claim 1, **characterized in that** the drive mechanism (12) displays a drive element which preferably is configured so as to be a toggle lever joint (13), a gear rack, a spindle and/or a pivot gear.

3. Brewing apparatus (1) according to one of the preceding claims, **characterized in that** the drive mechanism (12) preferably is manually actuatable by means of a hand lever (14) and/or is automatically drivable by means of a drive motor.

4. Brewing apparatus (1) according to one of the preceding claims, **characterized in that**, for locking the brewing chamber (6) in the extracting position, the locking mechanism (15) is transferable from a releasing position into a locking position.

5. Brewing apparatus (1) according to one of the preceding claims, **characterized in that** the locking mechanism (15) displays a latch (16), wherein the latch (16) preferably is configured so as to be roller-shaped or ball-shaped.

6. Brewing apparatus (1) according to one of the preceding claims, **characterized in that** the first brewing chamber element (2) displays a retaining element, at least one return spring (21), and a displacing element (19), wherein the retaining element (22) and the displacing element are connected by means of a return spring (21) and wherein the retaining element (22) is displaceable in relation to the displacing element (19).

7. Brewing apparatus (1) according to one of the preceding claims, **characterized in that** the at least one latch (16) in the releasing position is displaceable along the axial direction (5) between the first brewing chamber element (2) and the wall part (17).

8. Brewing apparatus (1) according to one of the preceding claims, **characterized in that** a first wall (30) of a wall part (17) which is fixedly connected to the brewing apparatus (1) displays at least one first chamfer (18), and a second wall (31) of the displacing element (19) displays at least one second chamfer (20), wherein the first chamfer (18), the second chamfer (20), and the retaining element (22) contact the latch (16) in the locking position.

9. Brewing apparatus (1) according to one of the preceding claims, **characterized in that** the second chamfer (20) is configured in such a manner that, in the event of the locking mechanism (15) being transferred from the releasing position into the locking position, a movement of the latch (16) in a transverse direction, which is perpendicular to the axial direction (5), into a cavity which is formed by the first chamfer (18) and the second chamfer (20) is caused.

10. Brewing apparatus (1) according to one of the preceding claims, **characterized in that** the arrester is configured such that during the extracting process a returning force which acts counter to the axial direction (5) from the retaining element on the latch (16), which is located in the locking position, is absorbed by the first chamfer (18).

11. Brewing apparatus (1) according to one of Claims 1 to 4, **characterized in that** the locking mechanism (15) displays a piston (37) and a latch (16) which is rotatably connected to the piston (37) and which is provided for engagement in an opening (35) of a wall part (17) and/or for locking, using at least one blocking element (36).

12. Brewing apparatus (1) according to one of the preceding claims, **characterized in that** the drive mechanism (12) displays a hand lever (14) and a toggle lever joint (13), wherein the hand lever (14) displays a first coupling part (24) and the toggle lever joint (13) displays a second coupling part (25), wherein, in order to transmit a movement of the hand lever (14) to a movement of the toggle lever joint (13), the first and the second coupling part (25) are in operative interconnection by way of a gear wheel connection (32).

13. Method for operating a brewing apparatus (1), according to one of the preceding claims, **characterized in that**, in a first method step, a first (2) and/or a second brewing chamber element (3) are/is moved along an axial direction (5) from a loading position, in which the first (2) and the second brewing chamber element (3) are spaced apart from one another, into an extracting position, in which the first (2) and the second brewing chamber element (3) form a substantially closed brewing chamber (6), and in a second method step, in order for the brewing chamber (6) to be locked by means of a locking mechanism (15), which is transferable from a releasing position into a locking position in order for the brewing chamber (6) to be locked in the extracting position, a latch (16) of the locking mechanism (15) is displaced in a transverse direction which is perpendicular to the axial direction (5) and/or the latch (16) is pivoted about a pivot axis which is perpendicular to the axial direction (5).

14. Method according to Claim 13, **characterized in that** in a third method step, in order for the brewing chamber (6) to be unlocked by means of a locking mechanism (15), the latch (16) of the locking mechanism (15) is displaced in the transverse direction, and, in a fourth step, the first (2) and/or second brewing chamber element (3) is moved back along the axial direction (5), from the extracting position into the loading position.

15. Method according to Claim 13, **characterized in that**, during the first method step, the latch (16) is displaced in the axial direction (5) from a second chamfer (20) of a displacing element of the first brewing chamber element (2), and, during the second method step, the latch (16) is displaced in the transverse direction from the second chamfer (20) into a cavity which is formed by the first chamfer (18) of the wall of the brewing apparatus (1) and by the second chamfer (20), and during the extracting process a returning force which acts counter to the axial direction (5) from a retaining element of the first brewing chamber element (2) on the latch (16), which is located in the locking position, is jammed in the cavity between the first chamfer (18), the second chamfer (20), and the retaining element (22).

## Revendications

1. Dispositif d'infusion (1) pour extraire une capsule (4) avec un premier élément de chambre d'infusion (2) et un second élément de chambre d'infusion (3), dans lequel le premier (2) et/ou le second (3) élément de chambre d'infusion est déplaçable le long d'une direction axiale (5) d'une position de chargement, dans laquelle le premier (2) et le second (3) éléments de chambre d'infusion sont espacés l'un de l'autre, à une position d'extraction, dans laquelle le premier (2) et le second (3) éléments de chambre d'infusion forment une chambre d'infusion essentiellement fermée (6), dans lequel le dispositif d'infusion (1) présente un mécanisme d'entraînement (12) pour le déplacement du premier (2) et/ou du second (3) élément de chambre d'infusion, **caractérisé en ce que** le dispositif d'infusion (1) présente un mécanisme de verrouillage séparé (1) pour le verrouillage de la chambre d'infusion (6) dans la position d'extraction.

2. Dispositif d'infusion (1) selon la revendication 1, **caractérisé en ce que** le mécanisme d'entraînement (12) présente un élément d'entraînement, qui est formé de préférence par une articulation à genouillère (13), une crémaillère, une broche et/ou un engrenage de pivotement.

3. Dispositif d'infusion (1) selon l'une quelconque des revendications précédentes, **caractérisé en ce que** le mécanisme d'entraînement (12) peut de préférence être actionné manuellement au moyen d'une manette (14) et/ou être entraîné automatiquement au moyen d'un moteur d'entraînement.

4. Dispositif d'infusion (1) selon l'une quelconque des revendications précédentes, **caractérisé en ce que** le mécanisme de verrouillage (15) peut être déplacé d'une position de libération à une position de verrouillage pour le verrouillage de la chambre d'infusion (6) dans la position d'extraction.

5. Dispositif d'infusion (1) selon l'une quelconque des revendications précédentes, **caractérisé en ce que** le mécanisme de verrouillage (15) présente un verrou (16), dans lequel le verrou (16) est de préférence réalisé en forme de cylindre ou en forme de bille.

6. Dispositif d'infusion (1) selon l'une quelconque des revendications précédentes, **caractérisé en ce que** le premier élément de chambre d'infusion (2) présente un élément de retenue, au moins un ressort de rappel (21) et un élément coulissant (19), dans lequel l'élément de retenue (22) et l'élément coulissant sont reliés au moyen d'un ressort de rappel (21) et dans lequel l'élément de retenue (22) est déplaçable par rapport à l'élément coulissant (19).

7. Dispositif d'infusion (1) selon l'une quelconque des revendications précédentes, **caractérisé en ce que** ledit au moins un verrou (16) peut dans la position de libération être déplacé entre le premier élément de chambre d'infusion (2) et une partie de paroi (17) le long de la direction axiale (5).

8. Dispositif d'infusion (1) selon l'une quelconque des revendications précédentes, **caractérisé en ce qu'**une première paroi (30) d'une partie de paroi (17) solidement reliée au dispositif d'infusion (1) présente au moins une première rampe (18) et une seconde paroi (31) de l'élément coulissant (19) présente au moins une seconde rampe (20), dans lequel la première rampe (18), la seconde rampe (20) et l'élément de retenue (22) sont en contact avec le verrou (16) dans la position de verrouillage.

9. Dispositif d'infusion (1) selon l'une quelconque des revendications précédentes, **caractérisé en ce que** la seconde rampe (20) est réalisée de telle manière que lors d'un passage du mécanisme de verrouillage (15) de la position de libération à la position de verrouillage on provoque un déplacement du verrou (16) dans une direction transversale perpendiculaire à la direction axiale (5) dans un espace creux formé par la première rampe (18) et la seconde rampe (20).

10. Dispositif d'infusion (1) selon l'une quelconque des revendications précédentes, **caractérisé en ce que** le blocage est réalisé de telle manière que pendant le processus d'extraction une force de rappel agissant à l'inverse de la direction axiale (5) depuis l'élément de retenue sur le verrou (16) se trouvant dans la position de verrouillage soit reprise par la première rampe (18).

11. Dispositif d'infusion (1) selon l'une quelconque des revendications 1 à 4, **caractérisé en ce que** le mécanisme de verrouillage (15) présente un piston (37) et un verrou (16) relié de façon rotative au piston (37), qui est prévu pour s'engager dans une ouverture (3) d'une partie de paroi (17) et/ou pour le verrouillage avec au moins un élément de blocage (36).

12. Dispositif d'infusion (1) selon l'une quelconque des revendications précédentes, **caractérisé en ce que** le mécanisme d'entraînement (12) présente une manette (14) et une articulation à genouillère (13), dans lequel la manette (14) présente une première partie de couplage (24) et l'articulation à genouillère (13) présente une seconde partie de couplage (25), dans lequel la première et la seconde (25) parties de couplage sont en liaison active l'une avec l'autre par une liaison par roues dentées (32), afin de convertir un mouvement de la manette (14) en un mouvement de l'articulation à genouillère (13).

13. Procédé de fonctionnement d'un dispositif d'infusion (1) selon l'une quelconque des revendications précédentes, **caractérisé en ce que** dans une première étape du procédé on déplace un premier (2) et/ou un second (3) élément de chambre d'infusion le long d'une direction axiale (5) d'une position de chargement, dans laquelle le premier (2) et le second (3) éléments de chambre d'infusion sont espacés l'un de l'autre, à une position d'extraction, dans laquelle le premier (2) et le second (3) éléments de chambre d'infusion forment une chambre d'infusion essentiellement fermée (6) et dans une deuxième étape du procédé pour le verrouillage de la chambre d'infusion (6) au moyen d'un mécanisme de verrouillage (15), qui peut être déplacé d'une position de libération à une position de verrouillage pour le verrouillage de la chambre d'infusion (6) dans la position d'extraction on déplace un verrou (16) du mécanisme de verrouillage (15) dans une direction transversale perpendiculaire à la direction axiale (5) et/ou on fait pivoter le verrou autour d'un axe de pivotement perpendiculaire à la direction axiale (5).

14. Procédé selon la revendication 13, **caractérisé en ce que** dans une troisième étape du procédé pour le déverrouillage de la chambre d'infusion (6) au moyen d'un mécanisme de verrouillage (15) on déplace le verrou (16) du mécanisme de verrouillage (15) dans la direction transversale, et dans une quatrième étape on ramène le premier (2) et/ou le second (3) élément de chambre d'infusion le long de la direction axiale (5) de la position d'extraction à la position de chargement.

15. Procédé selon la revendication 13, **caractérisé en ce que** pendant la première étape du procédé le verrou (16) est déplacé en direction axiale (5) à partir d'une seconde rampe (20) d'un élément coulissant du premier élément de chambre d'infusion (2) et pendant la deuxième étape du procédé le verrou (16) est déplacé à partir de la seconde rampe (20) en direction transversale dans un espace creux formé par la première rampe (18) de la paroi du dispositif d'infusion (1) et la seconde rampe (20) et pendant le processus d'extraction il est coincé dans l'espace creux entre la première rampe (18), la seconde rampe (20) et l'élément de retenue (22) par une force de rappel agissant à l'inverse de la direction axiale (5) depuis un élément de retenue du premier élément de chambre d'infusion (2) sur le verrou (16) en position de verrouillage.
